# EUROPEAN PATENT APPLICATION

(11) **EP 4 761 453 A1**
(43) Date of publication of application: **17.06.2026**
(21) Application number: 24858438.5
(22) Date of filing: 22.08.2024
(51) Int. Cl.: H04W 76/15

(54) **SENSING METHOD AND APPARATUS**

(30) Priority: 31.08.2023 CN 202311138235
(71) Applicant: HUAWEI TECHNOLOGIES CO., LTD., Shenzhen 518129 (CN)
(72) Inventor: NAREN, Gerile, Shenzhen, Guangdong 518129 (CN); DU, Rui, Shenzhen, Guangdong 518129 (CN); HUANG, Lei, Shenzhen, Guangdong 518129 (CN); HAN, Xiao, Shenzhen, Guangdong 518129 (CN)
(74) Representative: Körber, Martin Hans
(86) International application number: PCT/CN2024/113980
(87) International publication number: WO 2025/044896

(57) **Abstract**

A sensing method and an apparatus are provided, and may be applied to a wireless local area network system using 802.11 series protocols. The sensing method includes: A second access point receives a first request message from a first access point, transmits a response message of the first request message to the first access point, and transmits a second request message to a station associated with the second access point. The first request message is used to request the second access point to assist the first access point in performing sensing measurement. The second request message is used to request the station associated with the second access point to participate in a sensing measurement session initiated by the first access point. According to the method, a non-access point station may clearly learn, through an access point associated with the non-access point station, whether there is an access point searching for a sensing responder, to subsequently assist the access point that searches for the sensing responder in setting up sensing.

## Description

### CROSS-REFERENCE TO RELATED APPLICATIONS

This application claims priority to Chinese Patent Application No. 202311138235.2, filed with the China National Intellectual Property Administration on August 31, 2023 and entitled "SENSING METHOD AND APPARATUS", which is incorporated herein by reference in its entirety.

### TECHNICAL FIELD

This application relates to the field of wireless local area network (wireless local area network, WLAN) technologies, and in particular, to a sensing method and an apparatus.

### BACKGROUND

A signal transmitted by a wireless fidelity (wireless fidelity, Wi-Fi) device is usually received after being reflected, diffracted, and scattered by various obstacles, and a surrounding environment may be inferred and sensed by analyzing features of the wireless signal affected by the various obstacles. Therefore, a wireless local area network (wireless local area network, WLAN) sensing technology is derived.

The IEEE 802.1 1bf protocol supports setting up sensing between an access point and a non-access point station. Currently, the non-access point station determines, based only on a probe response of the access point, whether the access point searches for a sensing responder (for example, the non-access point station). If the non-access point station does not transmit a probe request, the non-access point station cannot determine whether the access point searches for a sensing responder. As a result, the non-access point station cannot participate in sensing measurement.

### SUMMARY

This application provides a sensing method and an apparatus, to resolve a problem that a non-access point station cannot participate in sensing measurement.

To achieve the foregoing objectives, embodiments of this application use the following technical solutions:

According to a first aspect, an embodiment of this application provides a sensing method, and the method may be performed by a first communication apparatus. The first communication apparatus may be an access point, or the first communication apparatus is a component configured to implement functions of an access point, for example, the first communication apparatus is a unit/module, a circuit, a chip, or the like in the access point. The following describes the method provided in the first aspect by using an example in which the first communication apparatus is a second access point. In the first aspect, a non-access point station is associated with the second access point, and is not associated with a first access point.

The sensing method includes: The second access point receives a first request message from the first access point, transmits a response message of the first request message to the first access point, and transmits a second request message to a station associated with the second access point. The first request message is used to request the second access point to assist the first access point in performing sensing measurement. The second request message is used to request the station associated with the second access point to participate in a sensing measurement session initiated by the first access point.

In this solution, the first access point requests the second access point to assist the first access point in performing sensing measurement. In response to the request of the first access point, the second access point may request the station associated with the second access point to participate in the sensing measurement session initiated by the first access point. For the first access point, the station associated with the second access point is an unassociated non-access point station. According to the method, the non-access point station may clearly learn, through the second access point associated with the non-access point station, that the first access point that is not associated with the non-access point station needs a sensing responder, to subsequently participate in the sensing measurement session initiated by the first access point, and assist the first access point in setting up sensing.

In an implementation, the first request message includes first time information, and the first time information indicates time information for transmitting a sensing measurement request message by the first access point or time information for initiating the sensing measurement session by the first access point.

That the first access point transmits the sensing measurement request message may be considered that the first access point initiates the sensing measurement session. The first access point notifies, through the first request message, the second access point of the time at which the first access point transmits the sensing measurement request message, to assist the second access point in indicating the non-access point station to transmit a sensing measurement query message before the first access point transmits the sensing measurement request message. This solution can ensure that the first access point receives the sensing measurement query message before initiating the sensing measurement session, to obtain, from the sensing measurement query message, sensing capability information of the non-access station and sensing time window information of the non-access station, and assist the first access point in setting up a sensing measurement session with the non-access station.

In an implementation, the first time information is a first moment, so that processing complexity is reduced.

In an implementation, the first time information is first duration, where the first duration is duration between a first start moment and a moment at which the first access point transmits the sensing measurement request message, and the first start moment is a transmitting moment of the first request message.

In an implementation, the first request message further includes time window information for performing sensing measurement by the first access point. The time window information helps the second access point select an appropriate station to assist the first access point in setting up sensing, and avoids selecting an inappropriate station to assist the first access point in setting up sensing as much as possible. This can improve a success rate and efficiency of setting up sensing.

In an implementation, the first request message further includes a sensing measurement parameter, and the sensing measurement parameter is used by the first access point to set up the sensing measurement session with the station. Based on the sensing measurement parameter, all stations selected by the second access point can participate in sensing measurement of the first access point, thereby improving a success rate of sensing setup between the first access point and the non-access point station.

In an implementation, the first request message further includes a number of stations requested by the first access point. Based on the number of stations requested by the first access point, the second access point may select a proper number of stations, to minimize unnecessary non-access point stations assisting the first access point in setting up sensing, thereby saving resources.

In an implementation, the response message of the first request message includes a number of stations provided by the second access point. This solution helps the first access point determine whether the first access point further needs to request another access point to assist in performing sensing measurement, to meet a sensing requirement of the first access point. For example, if a station provided by the second access point cannot meet the sensing requirement of the first access point, the first access point may further request the another access point to assist the first access point in setting up sensing.

In an implementation, the first request message includes indication information, and the indication information is used to request the second access point to provide identification information of a station participating in sensing measurement initiated by the first access point.

In an implementation, the response message of the first request message includes identification information of the station provided by the second access point.

The second access point provides, for the first access point based on the indication information, the identification information of the station participating in sensing measurement initiated by the first access point, so that the first access point can determine, without waiting for the sensing measurement query message of the station, a station participating in setting up sensing and initiate a sensing measurement session to the station. This solution can reduce signaling overheads of the sensing measurement query message, and improve efficiency of initiating the sensing measurement session by the first access point.

In an implementation, the second request message includes second time information and identification information of the first access point, where the second time information indicates time information for transmitting the sensing measurement query message by the station, or the second time information indicates the time information for transmitting a sensing measurement request by the first access point. According to this solution, the non-access point station can determine when to transmit the sensing measurement query message to the first access point, to notify the first access point in advance of existence of the non-access point station, and provide the first access point with sensing capability information of the non-access point station and sensing time window information of the non-access point station, thereby reducing a failure of setting up sensing with assistance of the non-access point station.

In an implementation, the second time information is a second moment; or the second time information is second duration, where the second duration is duration between a second start moment and the first moment, and the second start moment is a transmitting moment of the second request message.

In an implementation, the response message of the first request message further includes third time information, and the third time information indicates the time at which the first access point transmits the sensing measurement request message.

The third time information may be provided by the second access point for the first access point, to avoid a case in which the non-access point station misses the sensing measurement request message because the first access point transmits the sensing measurement request message extremely early.

In an implementation, the third time information is a third moment or third duration, where the third duration is duration between a third start moment and the moment at which the first access point transmits the sensing measurement request message, and the third start moment includes a transmitting moment of the response message of the first request message.

According to a second aspect, an embodiment of this application provides a sensing method, and the method may be performed by a second communication apparatus. The second communication apparatus may be an access point, or the second communication apparatus is a component configured to implement functions of the access point, for example, the second communication apparatus is a unit/module, a circuit, a chip, or the like in the access point. The following describes the method provided in the second aspect by using an example in which the second communication apparatus is a first access point. In the first aspect, a non-access point station is associated with a second access point, and is not associated with the first access point.

The sensing method includes: The first access point transmits a first request message to the second access point, receives a response message that is of the first request message and that is transmitted by the second access point, and transmits a sensing measurement request message to a station that assists the first access point in performing sensing measurement. The first request message is used to request the second access point to assist the first access point in performing sensing measurement.

In an implementation, the first request message includes first time information, and the first time information indicates time information for transmitting the sensing measurement request message by the first access point or time information for initiating a sensing measurement session by the first access point.

In an implementation, the first time information is a first moment; or the first time information is first duration, where the first duration is duration between a first start moment and a moment at which the first access point transmits the sensing measurement request message, and the first start moment is a transmitting moment of the first request message.

In an implementation, the first request message further includes time window information for performing sensing measurement by the first access point.

In an implementation, the first request message further includes a sensing measurement parameter, and the sensing measurement parameter is used by the first access point to set up the sensing measurement session with the station.

In an implementation, the first request message further includes a number of stations requested by the first access point.

In an implementation, the response message of the first request message includes a number of stations provided by the second access point.

In an implementation, the first request message includes indication information, and the indication information is used to request the second access point to provide identification information of a station participating in sensing measurement initiated by the first access point.

In an implementation, the response message of the first request message includes identification information of the station provided by the second access point.

In an implementation, the second request message includes second time information and identification information of the first access point, where the second time information indicates time information for transmitting a sensing measurement query message by the station, or the second time information indicates the time information for transmitting a sensing measurement request by the first access point.

In an implementation, the second time information is a second moment; or the second time information is second duration, where the second duration is duration between a second start moment and the first moment, and the second start moment is a transmitting moment of the second request message.

In an implementation, before transmitting the sensing measurement request message to the station that assists the first access point in performing sensing measurement, the method further includes: The first access point receives a sensing measurement query message transmitted by the station, where the sensing measurement query message includes identification information of the second access point.

In an implementation, the response message of the first request message includes identification information of the station; and that the first access point transmits the sensing measurement request message to the station that assists the first access point in performing sensing measurement includes: The first access point transmits, based on the identification information, the sensing measurement request message to the station that assists the first access point in performing sensing measurement.

In an implementation, the response message of the first request message further includes third time information, and the third time information indicates the time at which the first access point transmits the sensing measurement request message.

In an implementation, the third time information is a third moment or third duration, where the third duration is duration between a third start moment and a moment at which the first access point transmits the sensing measurement request message, and the third start moment includes a transmitting moment of the response message of the first request message.

In an implementation, that the first access point transmits the sensing measurement request message to the station that assists the first access point in performing sensing measurement includes: The first access point transmits, based on the identification information of the station and the third time information that are included in the response message of the first request message, the sensing measurement request message to the station that assists the first access point in performing sensing measurement.

For beneficial effect of the second aspect and the implementations, refer to beneficial effect of the first aspect and the implementations of the first aspect. Details are not described herein again.

According to a third aspect, an embodiment of this application provides a sensing method, and the method may be performed by a third communication apparatus. The third communication apparatus may be a station, or the third communication apparatus is a component configured to implement functions of the station, for example, the third communication apparatus is a unit/module, a circuit, a chip, or the like in the station. The following describes the method provided in the third aspect by using an example in which the third communication apparatus is a non-access point station. The non-access point station is associated with a second access point, and is not associated with a first access point.

The sensing method includes: The non-access point station receives a second request message from the second access point, and transmits a sensing measurement query message to the first access point, or receives a sensing measurement request message transmitted by the first access point. The second request message is used to request a station (namely, a non-access point station) associated with the second access point to participate in a sensing measurement session initiated by the first access point. The sensing measurement query message includes identification information of the second access point.

In an implementation, the second request message includes second time information and identification information of the first access point, where the second time information indicates time information for transmitting the sensing measurement query message by the non-access point station, or the second time information indicates time information for transmitting the sensing measurement request message by the first access point.

In an implementation, the second time information is a second moment, and that the non-access point station transmits the sensing measurement query message to the first access point includes: The non-access point station transmits the sensing measurement query message to the first access point at the second moment.

In an implementation, the second time information is second duration, and that the non-access point station transmits the sensing measurement query message to the first access point includes: The non-access point station transmits the sensing measurement query message to the first access point within the second duration from a second start moment, where the second start moment is a transmitting moment of the second request message.

In an implementation, the second time information is a second moment, and the non-access point station does not enter a sleep state before the first access point transmits the sensing measurement request message. Alternatively, the second time information is second duration, and the non-access point station does not enter a sleep state within the second duration starting from a second start moment, where the second start moment is a transmitting moment of the second request message.

For beneficial effect of the third aspect and the implementations, refer to beneficial effect of the first aspect and the implementations of the first aspect. Details are not described herein again.

According to a fourth aspect, an embodiment of this application provides a sensing method, and the method may be performed by a third communication apparatus. The third communication apparatus may be a station, or the third communication apparatus is a component configured to implement functions of the station, for example, the third communication apparatus is a unit/module, a circuit, a chip, or the like in the station. The following describes the method provided in the third aspect by using an example in which the third communication apparatus is a non-access point station (for example, a first station). The non-access point station is associated with a second access point, and is not associated with a first access point.

The sensing method includes: The first station receives a probe response message from at least one access point, and transmits a sensing measurement query message to the first access point in the at least one access point. A probe response message of each access point includes time window information for performing sensing measurement by the access point. Time window information of the first station matches a time window in which the first access point performs sensing measurement.

In this solution, one station may determine, based on time window information for separately performing sensing measurement by a plurality of access points, an access point that can be assisted in setting up sensing, to improve a success rate of setting up sensing as much as possible.

According to a fifth aspect, an embodiment of this application provides a communication apparatus. The communication apparatus has a function of implementing behavior in the method example in any one of the first aspect to the fourth aspect. For beneficial effect, refer to related descriptions of the first aspect to the fourth aspect. Details are not described herein again. For example, the communication apparatus may be the first access point, the second access point, the non-access point station, or the first station in any one of the first aspect to the fourth aspect. For another example, the communication apparatus may be an apparatus that can support the first access point, the second access point, the non-access point station, or the first station in implementing functions required by the method provided in any one of the first aspect to the fourth aspect, for example, the communication apparatus may be a chip or a chip system in the first access point, the second access point, the non-access point station, or the first station.

In a possible design, the communication apparatus includes a baseband apparatus and a radio frequency apparatus.

In a possible design, the communication apparatus includes a corresponding means (means) or module configured to perform the methods in the first aspect to the fourth aspect. For example, the communication apparatus includes a processing unit (sometimes also referred to as a processing module or a processor) and/or a transceiver unit (sometimes also referred to as a transceiver module or a transceiver). The transceiver unit can implement a transmitting function and a receiving function. When the transceiver unit implements the transmitting function, the transceiver unit may be referred to as a transmitting unit (also referred to as a transmitting module sometimes). When the transceiver unit implements the receiving function, the transceiver unit may be referred to as a receiving unit (also referred to as a receiving module sometimes). The transmitting unit and the receiving unit may be a same functional unit, the functional unit is referred to as the transceiver unit, and the functional unit can implement the transmitting function and the receiving function. Alternatively, the transmitting unit and the receiving unit may be different functional units, and the transceiver unit is a general term for these functional units. These units (modules) may perform corresponding functions in the method example in any one of the first aspect to the fourth aspect. For details, refer to detailed descriptions in the method example. Details are not described herein again.

According to a sixth aspect, an embodiment of this application provides a communication apparatus. The communication apparatus may be the communication apparatus in the fifth aspect in the foregoing embodiments, or a chip or a chip system disposed in the communication apparatus in the fifth aspect. The communication apparatus includes a communication interface and a processor. The processor is configured to perform the method performed by the first access point, the second access point, the non-access point station, or the first station in the foregoing method embodiments. For example, the communication apparatus may be the first access point, the second access point, the non-access point station, or the first station. Alternatively, the communication apparatus may be a functional module, for example, a processing chip or a radio frequency chip, in the first access point, the second access point, the non-access point station, or the first station.

According to a seventh aspect, an embodiment of this application provides a communication apparatus. The communication apparatus may be the communication apparatus in the fifth aspect in the foregoing embodiments, or a chip or a chip system disposed in the communication apparatus in the fifth aspect. The communication apparatus includes a processor and a memory. The memory is configured to store a computer program, instructions, or data. The processor is coupled to the memory. When the processor reads the computer program, the instructions, or the data, the communication apparatus is enabled to perform the method performed by the first access point, the second access point, the non-access point station, or the first station in the foregoing method embodiments.

In an implementation, the memory is located outside the communication apparatus.

In an implementation, the memory is located in the communication apparatus.

In an implementation, the processor and the memory are integrated together.

According to an eighth aspect, an embodiment of this application provides a chip system. The chip system includes a processor, may further include a communication interface, and is configured to implement the method according to any one of the first aspect to the fourth aspect.

In an implementation, the chip system further includes a memory. The memory is configured to store a computer program (which may also be referred to as code or instructions). The processor is configured to: invoke the computer program from the memory, and run the computer program, to enable a device on which the chip system is installed to perform the method in any one of the first aspect and the implementations of the first aspect, enable a device on which the chip system is installed to perform the method in any one of the second aspect and the implementations of the second aspect, enable a device on which the chip system is installed to perform the method according to any one of the third aspect and the implementations of the third aspect, or enable a device on which the chip system is installed to perform the method according to any one of the fourth aspect and the implementations of the fourth aspect. The chip system may include a chip, or may include a chip and another discrete component.

According to a ninth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the fourth aspect.

During specific implementation, the communication apparatus may be a chip, the input circuit may be an input pin, the output circuit may be an output pin, and the logic circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a station such as a mobile phone. The interface circuit may be a radio frequency processing chip in the wireless communication device, and the processing circuit may be a baseband processing chip in the wireless communication device. Alternatively, the wireless communication device may be an access point such as a router. The interface circuit may be a radio frequency processing chip in the wireless communication device, and the processing circuit may be a processing chip in the wireless communication device.

According to a tenth aspect, an embodiment of this application provides a communication system. The communication system includes a terminal device and a network device. The terminal device is configured to implement functions of the method according to any one of the first aspect to the fourth aspect.

According to an eleventh aspect, an embodiment of this application provides a computer-readable storage medium. The computer-readable storage medium is configured to store a computer program or instructions. When the computer program or the instructions are run, the method according to any one of the first aspect and the implementations of the first aspect is implemented, the method according to any one of the second aspect and the implementations of the second aspect is implemented, the method according to any one of the third aspect and the implementations of the third aspect is implemented, or the method according to any one of the fourth aspect and the implementations of the fourth aspect is implemented.

According to a twelfth aspect, an embodiment of this application further provides a computer program product including instructions. When the instructions are run on a computer, the method according to any one of the first aspect and the implementations of the first aspect is implemented, the method according to any one of the second aspect and the implementations of the second aspect is implemented, the method according to any one of the third aspect and the implementations of the third aspect is implemented, or the method according to any one of the fourth aspect and the implementations of the fourth aspect is implemented.

For beneficial effect of the fifth aspect to the twelfth aspect and the implementations of the fifth aspect to the twelfth aspect, refer to descriptions of beneficial effect of any one of the first aspect to the fourth aspect and the implementations of the first aspect to the fourth aspect.

### BRIEF DESCRIPTION OF DRAWINGS

FIG. 1 is a diagram of a network architecture to which embodiments of this application are applicable;
FIG. 2 is a flowchart of setting up sensing between a non-AP STA and an AP when the AP unicasts a probe response frame according to an embodiment of this application;
FIG. 3 is a flowchart of setting up sensing between a non-AP STA and an AP when the AP broadcasts a probe response frame according to an embodiment of this application;
FIG. 4 is a schematic flowchart of a sensing method according to an embodiment of this application;
FIG. 5 is a diagram of a structure of a management frame in the 802.11 protocol according to an embodiment of this application;
FIG. 6 is a diagram of a first frame structure of a first request message according to an embodiment of this application;
FIG. 7 is a diagram of a second frame structure of a first request message according to an embodiment of this application;
FIG. 8 is a diagram of a third frame structure of a first request message according to an embodiment of this application;
FIG. 9 is a diagram of a fourth frame structure of a first request message according to an embodiment of this application;
FIG. 10 is a diagram of a first frame structure of a first response message according to an embodiment of this application;
FIG. 11 is a diagram of a second frame structure of a first response message according to an embodiment of this application;
FIG. 12 is a diagram of a third frame structure of a first response message according to an embodiment of this application;
FIG. 13 is a diagram of a first frame structure of a second request message according to an embodiment of this application;
FIG. 14 is a diagram of a second frame structure of a second request message according to an embodiment of this application;
FIG. 15 is a diagram of a frame structure of an MSDU according to an embodiment of this application;
FIG. 16 is a diagram of a structure of a communication apparatus according to an embodiment of this application; and
FIG. 17 is another diagram of a structure of a communication apparatus according to an embodiment of this application.

### DESCRIPTION OF EMBODIMENTS

Embodiments of this application may be applied to a wireless local area network (wireless local area network, WLAN) scenario, may be applied to an IEEE 802.11 system standard (for example, the 802.11ax standard), and may be applied to a next generation of the 802.11ax standard, for example, the 802.11be standard (Wi-Fi 7 or extremely high throughput (extremely high throughput, EHT)), 802.11ad, 802.11ay, and 802.11bf. Embodiments of this application may also be applied to a WLAN system such as an internet of things (internet of things, IoT) network or a vehicle to X (Vehicle to X, V2X) network. Certainly, embodiments of this application may be further applicable to other possible communication systems, for example, a long term evolution (long term evolution, LTE) system, a new radio (new radio, NR) system, and a future cellular communication system such as a 6th generation mobile communication technology (6th generation mobile communication technology, 6G).

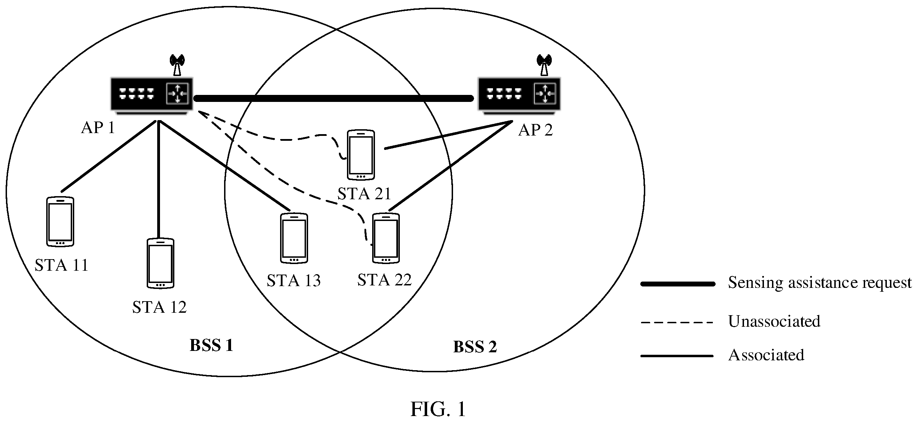

For example, FIG. 1 is a diagram of a network architecture of a WLAN to which embodiments of this application are applicable. In FIG. 1, for example, the WLAN includes two wireless access points (access point, AP) (which are respectively an AP 1 and an AP 2) and five non-access point stations (non-AP station, non-AP STA) (which are respectively a STA 11, a STA 12, a STA 13, a STA 21, and a STA 22). The STA 11, the STA 12, and the STA 13 are associated (association) with the AP 1, and the STA 21 and the STA 22 are associated with the AP 2. That a STA is associated with an AP means that the STA accesses a basic service set (basic service set, BSS) in which the AP is located, and the AP may perform network configuration and management on the STA, so that the STA can communicate with another STA in the BSS through the AP. Relatively, a STA that is not associated with an AP or is unassociated with an AP cannot use a network service provided by the AP, and therefore cannot communicate with a STA in a BSS in which the AP is located. A STA associated with an AP may be referred to as an associated STA for short, and the STA may set up association with the AP by using an association procedure. A STA that does not set up association with an AP may be referred to as an unassociated STA (unassociated non-AP STA) for short.

In FIG. 1, the STA 21 and the STA 22 are associated with the AP 1, and are not associated with the AP 2. Therefore, for differentiation, in FIG. 1, solid lines indicate association between the AP 1 and the STA 11, association between the AP 1 and the STA 12, and association between the AP 1 and the STA 13, and dashed lines indicate that the AP 1 is not associated with the STA 21 or the STA 22. It should be noted that a number of APs and a number of STAs in FIG. 1 are merely examples. There may be more or fewer APs and STAs. For example, in addition to the STA 11, the STA 12, and the STA 13, STAs associated with the AP 1 may further include other STAs, and STAs associated with the AP 2 may further include other STAs in addition to the STA 21 and the STA 22. For another example, the WLAN shown in FIG. 1 may further include more APs. Embodiments of this application are also applicable to communication between APs. For example, the APs may communicate with each other through a distributed system (distributed system, DS). Through the DS, the AP may communicate with a STA associated with the AP and/or a STA that is unassociated with the AP. Embodiments of this application are also applicable to communication between STAs.

An AP is an apparatus that is deployed in a wireless communication network and that provides a wireless communication function for a STA associated with the AP. For example, the AP may be an access point for a STA (for example, a mobile phone) to access a wired (or wireless) network, is mainly deployed in a home, a building, and a campus, and has a typical coverage radius of tens of meters to hundreds of meters. Certainly, the AP may alternatively be deployed outdoors. The AP is equivalent to a bridge that connects a wired network and a wireless network, and a main function of the AP is to connect various wireless network clients together and then connect the wireless network to the Ethernet. The AP in embodiments of this application may be an AP applicable to the IEEE 802.11 system standard. For example, the AP may be a device supporting the 802.11be standard, or may be a device supporting a plurality of WLAN standards of the 802.11 family such as 802.11ay, 802.11 ad, 802.11ax, and a next generation of 802.1 1be. The access point in this application may be a high efficiency (highly efficient, HE) AP or an extremely high throughput (extremely high throughput, EHT) AP, or may be an access point applicable to a future-generation Wi-Fi standard. The AP is usually a network side product that supports MAC and PHY in the 802.11 system standard. For example, the AP may be a communication device such as a base station, a router, a gateway, a repeater, a communication server, a switch, or a bridge. The base station may include various forms of macro base stations, micro base stations, relay stations, and the like. For another example, the AP may be a terminal device (for example, a mobile phone) or a network device (for example, a router) with a wireless fidelity (wireless fidelity, Wi-Fi) chip.

A STA is usually a terminal product that supports media access control (media access control, MAC) and a physical layer (physical, PHY) of the 802.11 system standard, may be a wireless communication chip, a wireless sensor, a wireless communication terminal, or the like, and may also be referred to as a user. For example, the STA may be a mobile phone, a tablet computer, a set-top box, a smart television, a smart wearable device, a vehicle-mounted communication device, or a computer that supports a Wi-Fi communication function. In an implementation, the STA supports the 802.11be standard; or the STA may support a plurality of WLAN standards of the 802.11 family such as 802.11ay, 802.11ad, 802.11ax, and a next generation of 802.11be. The STA in this application may be a directional multi-gigabit (directional multi-gigabit, DMG) STA, an enhanced directional multi-gigabit EDMG (enhanced directional multi-gigabit, EDMG) STA, an HE STA, or an EHT STA, or may be a STA applicable to a future-generation Wi-Fi standard.

In embodiments of this application, the AP and the STA may be devices used in the vehicle to X, may be internet of things nodes, sensors, or the like in the IoT, may be smart cameras, smart remote controls, smart water/electricity meters in a smart home, and may be sensors in a smart city.

The 802.11bf protocol supports an AP in setting up a sensing session with a non-AP STA and performing sensing measurement, so that the non-AP STA can perform sensing with an unassociated AP without association. Sensing measurement may also be referred to as wireless sensing or WLAN sensing. In embodiments of this application, sensing may be WLAN sensing, Wi-Fi sensing, or DMG sensing. For ease of understanding, related content of the sensing technology is first described.

Sensing measurement means that a transmitter and a receiver discover a target or determine a target status by transmitting a signal. WLAN sensing means that a STA having a WLAN sensing capability uses a received WLAN signal to detect feature information of an expected target in a given environment. For example, the feature information includes one or more of a distance, a speed, an angle, a motion, existence or proximity, a gesture, and the like. The target includes one or more of an object, a person, an animal, and the like. The environment includes one or more of a room, a house, a vehicle, an enterprise, and the like. For example, the transmitter may transmit a signal for sensing measurement to the receiver, the receiver may measure the signal to obtain a channel estimation result, for example, CSI, and the receiver may perform sensing based on the CSI. Alternatively, the receiver may transmit the channel estimation result to the transmitter, and the transmitter performs target sensing or target status sensing based on the channel estimation result. For example, the receiver or the transmitter may process the CSI, to determine whether a moving object exists in the environment.

In a sensing measurement process, devices participating in sensing are mainly as follows:

Sensing initiator (sensing initiator) is a device that initiates a sensing measurement procedure and transmits a sensing measurement request. For a non-DMG device, the sensing initiator is a device that transmits a sensing measurement request frame. For a DMG device, the sensing initiator is a device that transmits a DMG sensing measurement session request frame. The sensing initiator may be an AP. For example, the AP initiates a sensing measurement procedure as the sensing initiator, and one or more non-AP STAs participate in the sensing measurement procedure as sensing responders. The sensing initiator may be a non-AP STA. For example, the non-AP STA initiates a sensing measurement procedure as a sensing initiator, and the AP participates in the sensing measurement procedure as a sensing responder. The sensing measurement procedure initiated by the AP as the sensing initiator is also referred to as a trigger-based (trigger based, TB) sensing measurement procedure. The sensing measurement procedure initiated by the non-AP STA as the sensing initiator is also referred to as a trigger-based (non trigger based, non-TB) sensing measurement procedure.

Sensing responder (sensing responder) is a device that responds to a sensing procedure initiated by the sensing initiator and transmits a sensing measurement response. For a non-DMG device, the sensing responder is a device that transmits a sensing measurement response frame. For a DMG device, the sensing responder is a device that transmits a DMG sensing measurement session response frame.

Sensing transmitter (sensing transmitter) is a device that transmits a sensing signal. The sensing signal may be a signal used for sensing measurement, for example, a physical layer protocol data unit (physical layer protocol data unit, PPDU).

Sensing receiver (sensing receiver) is a device that receives a sensing signal transmitted by a sensing transmitter.

The sensing measurement generally includes the following four phases: sensing capabilities exchange (sensing capabilities exchange), sensing measurement session (sensing measurement session), sensing measurement exchange (sensing measurement exchange), and sensing measurement session terminating/termination (sensing measurement session termination).

In the sensing capabilities exchange phase, the sensing initiator and the sensing responder exchange respective sensing capability information. For example, an AP serves as the sensing initiator, and one or more STAs serve as sensing responders. The one or more STAs may transmit sensing capability information to the AP, and the AP may also transmit sensing capability information to the one or more STAs.

In the sensing measurement session phase, the sensing initiator and the sensing responder may negotiate a configuration parameter used for sensing measurement, for example, a role of the sensing responder (for example, a sensing transmitter or a sensing receiver), a bandwidth of a null data packet (null data packet, NDP), a time window used for sensing measurement, and a sensing measurement period.

In the sensing measurement exchange phase, the sensing transmitter transmits an NDP to the sensing receiver, and the sensing receiver performs measurement and estimates channel state information (channel state information, CSI).

Sensing measurement session termination means that the sensing initiator or the sensing responder terminates one or more sensing measurement sessions.

The STA needs to be associated with the AP for communication. That the STA is associated with the AP may also be understood as that the STA joins a basic service set (basic service set, BSS). Generally, one BSS includes one AP. Association is initiated by the STA. For example, the STA transmits an association request (association request) to the AP. If the STA is accepted by the AP, the AP returns an association response (association response). Capability information may be exchanged between the STA and the AP based on the association request and the association response. The AP may further notify, through the association response, the STA of a running parameter of a BSS in which the AP is located. After joining the BSS, the STA can communicate with other members in the BSS through the AP.

In a possible scenario, an AP needs to set up a sensing session or perform sensing measurement. For example, an AP that needs to set up a sensing session or perform sensing measurement is an AP 1. When a device associated with the AP 1 cannot meet a sensing measurement requirement, and no other STA that can participate in sensing is associated with the AP 1, according to the IEEE 802.11bf protocol that supports an AP in setting up a sensing measurement session with an unassociated non-access point station (unassociated non-AP STA) and performing sensing measurement, the non-AP STA can perform sensing with the unassociated AP, and the AP 1 can request the unassociated non-AP STA to perform sensing measurement with the AP 1. Unless otherwise specified, the non-AP STA in the following is an unassociated non-AP STA. For ease of description, the unassociated non-AP STA is referred to as an unassociated station for short.

Currently, it is specified that the AP carries a sensing capabilities element (sensing capabilities element) in a probe response (probe response) frame, and the sensing capabilities element carries sensing capability information. If the AP needs an unassociated non-AP STA to participate in a sensing measurement session as a sensing responder, a value of a responder needed (responder needed) field included in the sensing capabilities element is set to 1.

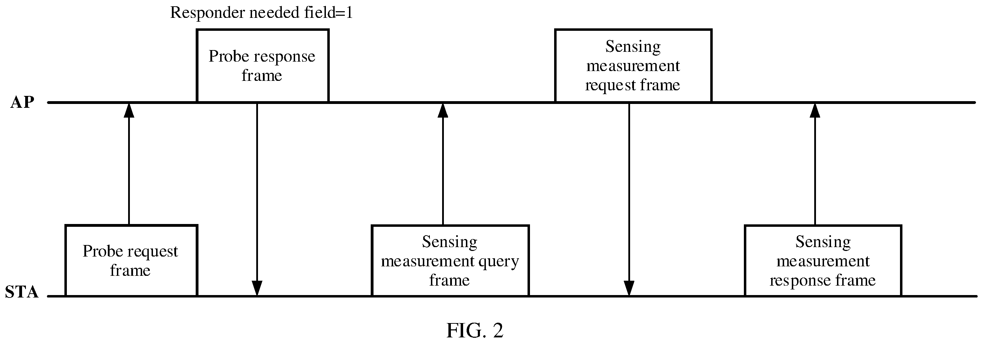

As shown in FIG. 2, when the non-AP STA actively scans a surrounding wireless network, for example, the non-AP STA transmits a probe request (probe request) frame to the AP, the AP returns a probe response frame. The non-AP STA may learn, based on a value of a responder needed field in the probe response frame, whether the AP is searching for a sensing responder. The STA in FIG. 2 is the non-AP STA.

Even if the non-AP STA is not associated with an AP, the non-AP STA may provide a sensing service for the AP. For example, the non-AP STA has been associated with another AP. For the AP, the non-AP STA is an unassociated station (unassociated non-AP STA), but the non-AP STA may provide a sensing service for the AP. For example, the non-AP STA may transmit a sensing measurement query (sensing measurement query) frame to the AP, where the sensing measurement query frame includes sensing capability information of the non-AP STA and time window information of the non-AP STA. The time window information indicates a time window, and the time window is a sensing availability window (sensing availability window). The time window information of the non-AP STA indicates that the non-AP STA may perform sensing measurement in the time window. The time window is periodic. In addition, the sensing measurement query frame may further enable the AP to learn about existence of the non-AP STA. This is because if the non-AP STA is a non-AP STA for the AP, and the non-AP STA does not transmit a probe request frame to the AP, the AP may not learn about existence of the non-AP STA. If the AP determines, based on the sensing capability information of the non-AP STA, that the non-AP STA meets the sensing measurement requirement of the AP, the AP may transmit a sensing measurement request (sensing measurement request) frame to the non-AP STA, to initiate setup of a sensing measurement session. The sensing measurement request frame includes a sensing measurement parameters element (sensing measurement parameters element), and the sensing measurement parameters element is used to set a sensing measurement configuration parameter of a sensing responder (for example, the non-AP STA). In response to the sensing measurement request frame, the non-AP STA transmits a sensing measurement request (sensing measurement response) frame, to indicate to receive or reject a request for setting up the sensing measurement session.

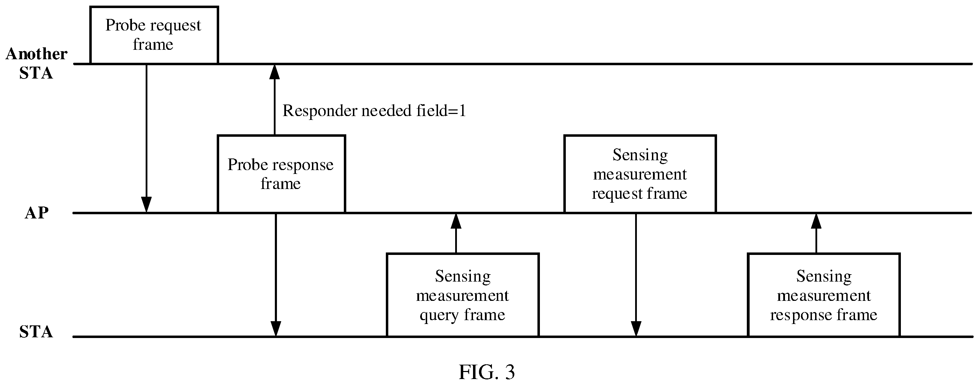

In FIG. 2, an example in which the AP unicasts a probe response frame is used. In a possible scenario, the AP may alternatively broadcast a probe response frame, as shown in FIG. 3. If the AP broadcasts the probe response frame, even if the non-AP STA does not transmit the probe request frame to the AP, the non-AP STA may learn whether the AP is searching for a sensing responder. For example, another non-AP STA transmits a probe request frame to the AP, and the AP replies with a probe response frame in a broadcast manner. In this case, the non-AP STA may also receive the probe response frame from the AP, to learn whether the AP is searching for a sensing responder.

It can be learned from the procedure in FIG. 2 that, when the non-AP STA does not perform an association process with the AP, if the non-AP STA does not actively transmit a probe request frame to the AP, the non-AP STA does not receive a probe response frame from the AP, and does not learn whether the AP is searching for a sensing responder. It can be learned from the procedure in FIG. 3 that, when the AP replies with the probe response frame in a unicast manner, because some non-AP STAs cannot receive the probe response frame from the AP, the non-AP STAs do not learn whether the AP is searching for a sensing responder. It can be learned that, because the non-AP STA does not learn whether the AP is searching for a sensing responder, even if the non-AP STA can be used as a sensing responder of the AP, the non-AP STA does not transmit a sensing measurement query frame to the AP, and there is no subsequent sensing measurement procedure. As a result, the AP cannot set up a sensing measurement session with the non-AP STA. In addition, if the non-AP STA does not transmit the sensing measurement query frame to the AP, the AP does not learn about existence of the non-AP STA, and there is no subsequent sensing measurement procedure. As a result, the AP cannot set up a sensing measurement session with the non-AP STA.

To resolve the foregoing technical problems, the technical solutions in embodiments of this application are provided. In embodiments of this application, one AP (for example, an AP 1) may request another AP (for example, an AP 2) to assist the AP 1 in performing sensing measurement, so that the AP 2 may request a non-AP STA associated with the AP 2 to participate in a sensing measurement session initiated by the AP 1. For the AP 1, the STA associated with the AP 2 is an unassociated non-AP STA. Therefore, the non-AP STA may clearly learn, through the AP 2 associated with the non-AP STA, that the AP 1 needs a sensing responder, to participate in the sensing measurement session initiated by the AP 1, and assist the AP 1 in setting up sensing.

The AP 2 and the AP 1 may listen to each other's information. For example, the AP 1 and the AP 2 belong to an overlapping basic service set (overlapping basic service set, OBSS). The OBSS means that two or more BSSs operate on a same channel, and are close enough to physically listen to each other's information. For example, a STA or an AP belonging to one BSS can receive an information frame transmitted by a STA or an AP in another BSS. Alternatively, when a basic service area of one BSS (for example, a first BSS) overlaps a basic service area of another BSS (for example, a second BSS), the first BSS may be referred to as an OBSS of the second BSS, and the second BSS may also be referred to as an OBSS of the first BSS. The basic service area is an area that includes members of a basic service set, and may include members of another BSS. That the basic service area of the one BSS overlaps the basic service area of the another BSS may be that the basic service area of the one BSS partially overlaps the basic service area of the another BSS, or the basic service area of the one BSS falls within the basic service area of the another BSS.

The example in FIG. 1 is still used. In FIG. 1, an example in which a BSS 1 and a BSS 2 exist is used. In FIG. 1, an example in which shapes of basic service areas of the BSS 1 and the BSS 2 are circles is used. It may be understood that the basic service area of the BSS may alternatively be rectangular, elliptical, or another regular or irregular shape. Herein, only a circle is used as an example for description. In FIG. 1, the AP 1, the STA 11, the STA 12, and the STA 13 belong to the BSS 1, and the STA 11, the STA 12, and the STA 13 are all associated with the AP 1; and the AP 2, the STA 21, and the STA 22 belong to the BSS 2, and the STA 21 and the STA 22 are both associated with the AP 2. In FIG. 1, the basic service area of the BSS 1 overlaps the basic service area in which the BSS 2 is located. In this case, the BSS 1 may be referred to as an OBSS of the BSS 2, and the BSS 2 may also be referred to as an OBSS of the BSS 1.

In FIG. 1, an example in which two BSSs are OBSSs of each other is used for description. If more than two BSSs overlap, the more than two BSSs may also be referred to as OBSSs of other BSSs. When there is an OBSS relationship between a plurality of BSSs, an AP or a STA in any one of the plurality of BSSs may also perform the method in any embodiment of this application. For details, refer to descriptions in embodiments of this application. Details are not described herein.

The STA needs to be associated with the AP for communication. Generally, one BSS includes one AP. If a STA needs to perform communication, the STA needs to join one BSS. That the STA joins the BSS may also be understood as that the STA is associated with the AP. Association is initiated by the STA. For example, the STA transmits an association request (association request) to the AP. If the STA is accepted by the AP, the AP returns an association response (association response). Capability information may be exchanged between the STA and the AP based on the association request and the association response. The AP may further notify, through the association response, the STA of a running parameter of a BSS in which the AP is located. After joining the BSS, the STA can communicate with other members in the BSS through the AP.

The following describes, with reference to the accompanying drawings, the solutions provided in embodiments of this application.

In embodiments of this application, a "message" transmitted between APs and a "message" transmitted between an AP and a STA are also referred to as "frames", for example, may be replaced with a "sensing measurement request message" and a "sensing measurement request frame", a "sensing measurement response message" and a "sensing measurement response frame", a "sensing measurement query message" and a "sensing measurement query frame", a "sensing measurement request message" and a "sensing measurement request frame", and the like. "When", "in a case of", and "if" mean that an apparatus performs corresponding processing in an objective situation, and are not intended to limit time, and the apparatus is not necessarily required to have a determining action during implementation, and do not mean any other limitation. Unless otherwise specified, "if" and "in a case of" may be interchangeable, and "when" and "in a case in which" may be interchangeable. "When" and "if"/"in a case of" are interchangeable.

Unless otherwise specified, a number of nouns indicates "a singular noun or a plural noun", that is, "one or more". "A plurality of" means two or more. In view of this, "a plurality of" may also be understood as "at least two" in embodiments of this application. "At least one" may be one or more. For example, at least one is one, two, or more. For example, including at least one means that one, two, or more are included, and which one or ones are included is not limited. For example, if at least one of A, B, and C is included, A, B, C, A and B, A and C, B and C, or A, B, and C may be included. Similarly, understandings of descriptions such as "at least one" are also similar. In addition, "at least one of the following items (pieces)" or a similar expression thereof means any combination of these items, including a single item (piece) or any combination of a plurality of items (pieces). For example, "at least one of A, B, and C" includes A, B, C, A and B, A and C, B and C, or A, B, and C. "And/or" describes an association relationship between associated objects, and represents that three relationships may exist. For example, A and/or B may represent that only A exists, both A and B exist, and only B exists. In addition, the character "/" generally indicates an "or" relationship between associated objects.

Unless otherwise specified, ordinal numbers such as "first" and "second" mentioned in embodiments of this application are used to distinguish a plurality of objects, and are not used to limit a sequence, a time sequence, priorities, or importance degrees of the plurality of objects. In addition, descriptions of "first" and "second" do not mean that objects are necessarily different. For example, a first request message and a second request message indicate that there are two request messages, and priorities, importance degrees, or the like of the two request messages are not limited.

In the method provided in embodiments of this application, steps performed by an access point may be implemented by the access point, or may be implemented by a component (for example, a module such as a chip, another processing unit, or a processor) in the access point. For example, the access point may be the AP 1 or the AP 2 in FIG. 1, or may be a chip (system) in the AP 1 or the AP 2 in FIG. 1. Steps performed by a station may be implemented by the station, or may be implemented by a component (for example, a module such as a chip, a processing unit, or a processor) in the station. The station may be the STA 21 or the STA 22 shown in FIG. 1, or may be a chip (system) in the STA 21 or the STA 22 in FIG. 1.

The following describes the method from a perspective of exchange between a first access point, a second access point, and a non-access point station by using an example in which a sensing method in embodiments of this application is performed by the first access point, the second access point, and the non-access point station. It should be understood that the sensing method in embodiments of this application may alternatively be implemented by another apparatus, for example, a chip or a communication apparatus having a communication function. The first access point is an access point that needs to perform sensing measurement, and a BSS in which the second access point is located and a BSS in which the first access point is located are OBSSs of each other. The non-access point station is associated with the second access point, and is not associated with the first access point. When sensing provided in embodiments of this application is applied to the scenario shown in FIG. 1, the first access point may be the AP 1, the second access point is the AP 2, and the non-access point station is the STA 21 or the STA 22. In embodiments of this application, the first access point and the second access point have performed time synchronization in advance.

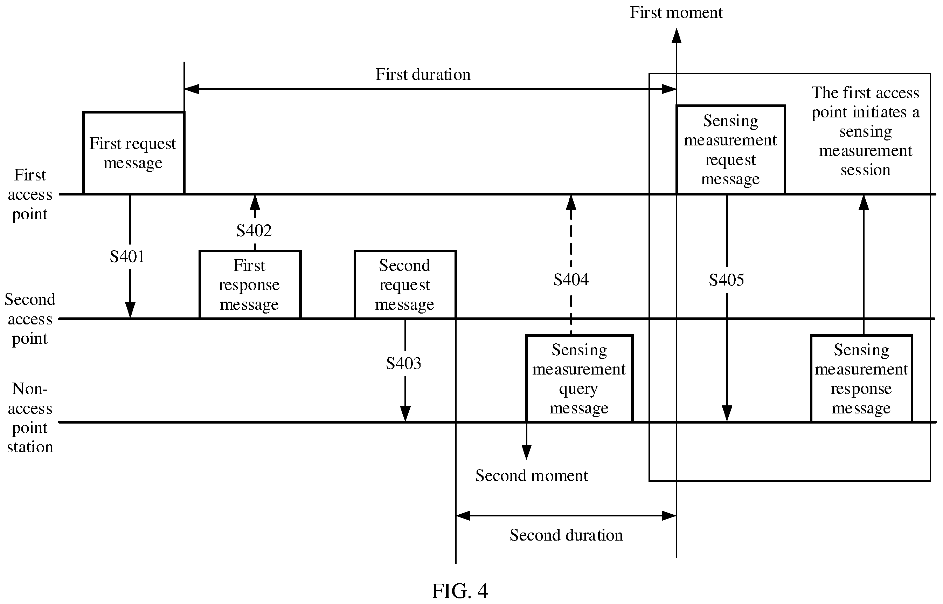

FIG. 4 is a schematic flowchart of a sensing method according to an embodiment of this application. As shown in FIG. 4, a procedure of the sensing method includes the following steps.

S401: The first access point transmits a first request message to the second access point, where the first request message is used to request the second access point to assist the first access point in performing sensing measurement.

Correspondingly, the second access point receives the first request message from the first access point. A specific name of the first request message is not limited in this embodiment of this application. For example, the first request message may be referred to as a sensing assistance request (sensing assistance request) message or a sensing assistance request frame. That the first request message is used to request the second access point to assist the first access point in performing sensing measurement may be replaced with: The first request message is used to request the second access point to assist the first access point in setting up sensing, the first request message is used to request the second access point to provide a non-access point station to participate in a sensing measurement session initiated by the first access point, or the first request message is used to request the second access point to provide a non-access point station to assist the first access point in setting up sensing.

Content included in the first request message varies with a requirement of the first access point. For example, the first request message may include one or more of the following information. The following sequentially describes content included in the first request message.
(1) The first request message includes time window information for performing sensing measurement by the first access point.

The time window information may indicate an availability window (availability window) for the first access point to perform sensing measurement. The availability window for sensing measurement may also be referred to as a sensing time window (sensing availability window) for short. The sensing time window may be periodic. The time window information may indicate a time interval in which the first access point performs sensing measurement and a period in which the first access point performs sensing measurement.

There may be a plurality of stations associated with the second access point, and only some of the plurality of stations can assist the first access point in setting up sensing. For example, time at which only some of the plurality of stations are used for sensing may be within the availability window in which the first access point performs sensing measurement. In other words, communication time of some of the plurality of stations conflicts with the availability window in which the first access point performs sensing measurement. For example, the plurality of stations include a station 1 and a station 2, and communication time of the station 1 is not within the availability window of the first access point. If the station 1 assists the first access point in setting up sensing, normal communication of the station 1 is not affected. On the contrary, communication time of the station 2 partially or completely overlaps the availability window of the first access point. In this case, if the station 2 assists the first access point in setting up sensing, normal communication of the station 2 is affected. Alternatively, a sensing time window of the station 1 or the station 2 may not meet a time window requirement of the first access point. In this case, the station 1 or the station 2 cannot assist the first access point in setting up sensing. For example, the station 1 and the station 2 have set up sensing with the second access point. The second access point may obtain respective sensing time window information of the station 1 and sensing time window information of the station 2. If the sensing time window information of the station 1 meets the time window requirement of the first access point, the station 1 may assist the first access point in setting up sensing. If the sensing time window information of the station 2 does not meet the time window requirement of the first access point, the station 2 cannot assist the first access point in setting up sensing. It should be noted that a plurality of times of sensing measurement may be performed in one sensing time window. If a sensing time window of the first access point overlaps a sensing time window of the second access point, the first access point and the second access point may perform, through coordination, for example, multi-AP coordination (multi-AP coordination), sensing measurement in turn in a same sensing time window.

Therefore, in this embodiment of this application, the first request message carries the time window information for performing sensing measurement by the first access point, so that the second access point can determine that the station 1 can assist the first access point in setting up sensing, and the station 2 cannot assist the first access point in setting up sensing, that is, the second access point selects a proper station to assist the first access point in setting up sensing. This helps improve a success rate and efficiency of setting up sensing.

In an implementation, the first request message may alternatively not carry the time window information for performing sensing measurement by the first access point. In this case, how the second access point selects, from the associated stations, a station that assists the first access point in setting up sensing is not limited in this embodiment of this application. For example, the second access point may request all the associated stations to assist the first access point in setting up sensing.

(2) The first request message includes first time information.

The first time information may indicate time information for transmitting a sensing measurement request (sensing measurement request) message by the first access point. That the first access point transmits the sensing measurement request message is a first phase in which the first access point initiates the sensing measurement session. Therefore, the first time information may also indicate time information for initiating the sensing measurement session by the first access point. The sensing measurement request message may also be referred to as a sensing measurement request frame.

It may be understood that, if the non-access point station does not transmit a sensing measurement query message to the first access point, the first access point does not learn about existence of the non-access point station, and cannot obtain sensing capability information of the non-access point station and sensing time window information of the non-access point station. Consequently, the first access point cannot initiate a sensing measurement session to the non-access point station. Therefore, the first request message carries the first time information, so that the non-access point station can transmit the sensing measurement query message to the first access point before the first access point transmits the sensing measurement request message. In this way, the first access point initiates the sensing measurement session to the non-access point station based on a sensing capability of the non-access point station and the sensing time window of the non-access point station. In this way, the second access point may indicate, based on the first time information, an occasion at which the non-access point station transmits the sensing measurement query message, to ensure that the first access point obtains the sensing capability information of the non-access point and the sensing time window information of the non-access point before initiating the sensing measurement session, thereby assisting the first access point in setting up the sensing measurement session with the non-access point.

The first time information may be a first moment, and the first moment is a moment at which the first access point transmits the sensing measurement request message, as shown in FIG. 4. In this way, the second access point may indicate, based on the first moment, the non-access point station to transmit the sensing measurement query message before the first moment.

Alternatively, the first time information may be first duration, and the first duration is duration between a first start moment and a moment at which the first access point transmits the sensing measurement request message. In this way, the second access point may determine, based on the first start moment and the first duration, a moment at which the first access point transmits the sensing measurement request message, to indicate the non-access point station to transmit the sensing measurement query message before the moment at which the first access point transmits the sensing measurement request message.

The first start moment may be a transmitting moment of the first request message. In this case, the first request message may include the first start moment and the first duration. After transmitting the first request message, the first access point starts timing (which is used as an example in FIG. 4), and transmits the sensing measurement request message when reaching the first duration. For example, after transmitting the first request message, the first access point starts a timer. Timing duration of the timer is the first duration. When reaching the timing duration of the timer, the first access point transmits the sensing measurement request message. Alternatively, it may be defined in a protocol that the first start moment may be a moment at which the second access point receives the first request message, and the first request message includes the first duration. The moment at which the second access point receives the first request message may be considered as a moment at which the first access point completes transmitting of the first request message. The moment at which the first access point completes transmitting of the first request message may be determined based on a moment at which the first access point transmits the first request message and a transmission delay of the first request message. In this case, the first access point starts timing after transmitting the first request message, and transmits the sensing measurement request message when reaching the first duration. Alternatively, it is defined in the protocol that the first start moment is a moment at which the first access point receives a response message of the first request message. In this case, the first access point starts timing after receiving the response message of the first request message, and transmits the sensing measurement request message when reaching the first duration.

(3) The first request message includes a number of stations requested by the first access point.

A number of non-access point stations required by the first access point may vary with different sensing requirements. If the first access point needs a large number of non-access point stations, and in stations associated with the second access point, a small number of stations can assist the first access point in setting up sensing, even if all the stations that are associated with the second access point and that can assist the first access point in setting up sensing participate in the sensing measurement session transmitted by the first access point, a sensing requirement of the first access point cannot be met. If the first access point requires a small number of non-access point stations, but the second access point provides more non-access point stations for the first access point, a waste is caused. Therefore, the first request message may include the number of stations requested by the first access point, so that the second access point selects a proper number of non-access point stations to assist the first access point in setting up sensing, thereby reducing participation of unnecessary non-access point stations as much as possible, and saving resources. It may be understood that, if a non-access point station provided by the second access point cannot meet the sensing requirement of the first access point, the first access point may further request another access point to assist the first access point in setting up sensing.

In an implementation, the first request message may not include the number of stations requested by the first access point. In this case, how the second access point selects a number of non-access point stations to assist the first access point in setting up sensing is not limited in this embodiment of this application. For example, the second access point may decide to provide all non-access point stations that can assist the first access point in setting up sensing. Alternatively, it is agreed in a protocol that the second access point provides all non-access point stations that can assist the first access point in setting up sensing.

(4) The first request message includes a sensing measurement parameter, and the sensing measurement parameter is used by the first access point to set up a sensing measurement session with the non-access point station.

As described above, the sensing measurement parameter may include the availability window in which the first access point performs sensing measurement, the sensing measurement period, the bandwidth of the NDP, and the like. In the stations associated with the second access point, sensing capabilities of some stations may not support the sensing measurement parameter of the first access point. In this case, even if the second access point selects a non-access point station based on the availability window in which the first access point performs sensing measurement, the selected one or more non-access point stations still cannot assist the first access point in setting up sensing, resulting in a sensing setup failure. To reduce unnecessary signaling overheads and improve a success rate of sensing setup between the first access point and each non-access point station, the first request message may include the sensing measurement parameter. In this way, the second access point determines, based on the sensing measurement parameter, a non-access point station that can assist the first access point in setting up sensing. This helps improve a success rate and efficiency of setting up sensing.

In an implementation, the first request message may alternatively not carry the sensing measurement parameter.

(5) The first request message includes indication information, and the indication information is used to request the second access point to provide identification information of a non-access point station participating in sensing measurement initiated by the first access point.

As described above, if a non-access point station does not transmit a sensing measurement query message to the first access point, the first access point does not learn about existence of the non-access point, and naturally does not initiate a sensing measurement session to the non-access point station. Therefore, the first access point may request the second access point to provide the identification information of the non-access point station, so that the first access point can learn about the non-access point station without the need for the non-access point station to transmit the sensing measurement query message, and then initiate the sensing measurement session to the non-access point station. Because the non-access point station does not need to transmit the sensing measurement query message, signaling overheads can be reduced, and efficiency of initiating the sensing measurement session by the first access point can be improved. In addition, the second access point provides the identification information of the non-access point station, so that the first access point can clearly learn about a sensing range and associate with the non-access point station.

The identification information of the non-access point station may be media access control (media access control, MAC) address information of the non-access point station or other information that may uniquely identify the non-access point station.

The indication information may be an indication field. If the first request message includes the indication field, the first request message is further used to request the second access point to provide the identification information of the non-access point station participating in sensing measurement initiated by the first access point. Alternatively, the indication information is a value of an indication field. When the first request message includes the indication field, and the value of the indication field is a first value (for example, 1), the first request message is further used to request the second access point to provide the identification information of the non-access point station participating in sensing measurement initiated by the first access point.

In an implementation, the first request message may not include the indication information.

It should be noted that the first request message may include one or a combination of the foregoing (1) to (5). For example, the first request message may include the first time information and the time window information for performing sensing measurement by the first access point. Alternatively, the first request message may include the first time information and the sensing measurement parameter used by the first access point to perform sensing measurement. Alternatively, the first request message may include the first time information and the number of non-access point stations that need to be requested by the first access point. Alternatively, the first request message may include the first time information, the time window information for performing sensing measurement by the first access point, and the number of non-access point stations that need to be requested by the first access point. Alternatively, the first request message may include the first time information and the indication information. Alternatively, the first request message may include the first time information, the time window information for performing sensing measurement by the first access point, and the indication information. Alternatively, the first request message may include the first time information, the time window information for performing sensing measurement by the first access point, the number of non-access point stations that need to be requested by the first access point, and the indication information. Examples are not enumerated herein.

S402: The second access point transmits the response message of the first request message to the first access point.

Correspondingly, the first access point receives the response message of the first request message from the second access point. For ease of description, in this embodiment of this application, the response message of the first request message is referred to as a first response message. A specific name of the first response message is not limited in this embodiment of this application. For example, the first response message is referred to as a sensing assistance response (sensing assistance response) message or a sensing assistance response frame. The first response message may indicate whether the second access point accepts the first request message.

For example, there is no station that can assist the first access point in setting up sensing in the stations associated with the second access point. In this case, the first response message may indicate that the first request message is not accepted or the first request message is rejected, indicating that the second access point cannot provide a station that can assist the first access point in setting up sensing.

For another example, there is a station that can assist the first access point in setting up sensing in the stations associated with the second access point, but the station may have set up a sensing measurement session with another access point. If the station assists the first access point in setting up sensing, the sensing measurement session that has been set up by the station needs to be interrupted, and sensing of another station is affected. In this case, the first response message may also indicate not to accept the first request message or indicate to reject the first request message, indicating that the second access point cannot provide a station that can assist the first access point in setting up sensing.

Alternatively, there is a station that can assist the first access point in setting up sensing in the stations associated with the second access point, and the first response message may indicate to accept the first request message, indicating that the second access point can provide the station that can assist the first access point in setting up sensing.

Content included in the first response message varies with content included in the first request message. For example, the first request message includes a number of stations that perform sensing measurement with the first access point, and the first response message may include a number of stations provided by the second access point. The first access point may determine, based on the number included in the first response message, whether another access point needs to be requested to assist in performing sensing measurement, to meet an actual sensing requirement of the first access point. For example, if the number included in the first response message is less than the number included in the first request message, the first access point may request the another access point to assist in performing sensing measurement. If the number included in the first response message is greater than or equal to the number included in the first request message, the first access point does not need to request the another access point to assist in performing sensing measurement.

For example, the first request message includes the indication information. If the second access point determines that there is a non-access point station that can assist the first access point in setting up sensing, the first response message may include identification information of the non-access point station provided by the second access point. Alternatively, the first response message includes identification information of a non-access point station that participates/assists in sensing measurement initiated by the first access point. In this case, the first access point may determine, based on the first response message, the non-access point station that assists the first access point in setting up sensing, to initiate a sensing measurement session to the non-access point station.

It may be understood that a process in which the second access point requests, through a second request message, a non-access point station to assist the first access point in setting up sensing takes specific processing time. To avoid a case in which some non-access point stations cannot receive the measurement sensing request message because the first access point has transmitted the measurement sensing request message before exchange between the second access point and the non-access point station is completed, the second access point may further notify the first access point of time at which the first access point transmits the sensing measurement request message.

For example, the first response message further includes third time information, and the third time information may indicate the time at which the first access point transmits the sensing measurement request message.

In an implementation, the third time information is third duration, and the third duration is duration between a third start moment and the moment at which the first access point transmits the sensing measurement request message. The third start moment may be a moment at which the second access point transmits the first response message, or the third start moment is a moment at which the second access point completes transmitting of the first response message. The moment at which the second access point completes transmitting of the first response message may be determined based on a moment at which the second access point transmits the first response message and transmission time of the first response message. The first access point starts timing after receiving the first response message, and may transmit the measurement sensing request message after reaching the third duration.

In an implementation, the third time information is a third moment, and the third moment may be determined based on a moment at which the second request message is transmitted/transmitting of the first response message is completed and processing duration required for exchange between the second access point and the non-access point station.

Content included in the first response message is merely an example. When the first request message includes one or more of the foregoing (1) to (5), the first response message may also include a number of stations provided by the second access point and/or identification information of stations provided by the second access point. It may be understood that, when the first response message includes the number of stations provided by the second access point and the identification information of the stations provided by the second access point, a number of pieces of identification information is the same as the number of stations. Alternatively, the first response message may include the identification information of the stations provided by the second access point and the third time information. Alternatively, the first response message includes the number of stations provided by the second access point, the identification information of the stations provided by the second access point, and the third time information.

It should be noted that the first access point and the second access point may belong to a same DS, that is, the first request message and the first response message may be transmitted through a communication line between the first access point and the second access point.

S403: The second access point transmits the second request message to the non-access point station, where the second request message is used to request the non-access point station to participate in the sensing measurement session initiated by the first access point.

Correspondingly, the non-access point station receives the second request message from the second access point. It should be understood that the non-access point station is a station associated with the second access point. If there is a non-access point station that can assist the first access point in setting up sensing in the stations associated with the second access point, the second access point may request the non-access point station to participate in the sensing measurement session initiated by the first access point. For example, the second access point transmits the second request message to the non-access point station, where the second request message is used to request the non-access point station to participate in the sensing measurement session initiated by the first access point. A specific name of the second request message is not limited in this embodiment of this application. For example, the second request message may be referred to as an associated sensing assistance request (unassociated sensing assistance request) message/associated sensing assistance request frame.

If the non-access point station can assist the first access point in setting up sensing, the non-access point station may transmit a sensing measurement query message to the first access point, so that the first access point learns about existence of the non-access point station. From this perspective, the second request message may also be used to request the non-access point station to transmit the sensing measurement query message to the first access point.

Correspondingly, the second request message may include identification information of the first access point and second time information. The identification information of the first access point may be a BSSID of a BSS in which the first access point is located or MAC address information of the first access point. The non-access point station receives the second request message, and determines, based on the identification information of the first access point, to transmit the sensing measurement query message to the first access point. The second time information indicates time information for transmitting the sensing measurement query message by the non-access point station to the first access point. The non-access point station may determine, based on the second time information, an occasion for transmitting the sensing measurement query message. Because the non-access point station needs to transmit the sensing measurement query message to the first access point before the first access point transmits the sensing measurement request message, if the non-access point station learns about the time at which the first access point transmits the sensing measurement request message, the non-access point station may also determine when to transmit the sensing measurement query message to the first access point. From this perspective, the second time information may also indicate the time information for transmitting the sensing measurement request message by the first access point.

It may be understood that, if the first response message transmitted by the second access point to the first access point includes identification information of the non-access point station participating in sensing measurement performed by the first access point, the non-access point station does not need to transmit the sensing measurement query message to the first access point. In this case, the second time information may indicate the non-access point station to wait to receive the sensing measurement request message from the first access point before time indicated by the second time information.

The second time information may be a second moment, and the second moment may be the same as the first moment, or may be earlier than the first moment (which is used as an example in FIG. 4).

The second time information may alternatively be second duration. The second duration is duration between a second start moment and the first moment. The second start moment may be a receiving moment of the second request message (which is used as an example in FIG. 4), or the second start moment may be a transmitting moment of the second request message. For example, the second access point may determine, based on the first time information in the first request message, the time (for example, the first moment) at which the first access point transmits the sensing measurement request message, and the second access point may determine the second duration based on the second start moment and the first moment.

The second access point may unicast the second request message, that is, the second access point transmits the second request message to the non-access point station that can assist the first access point in setting up sensing. Alternatively, the second access point may multicast or unicast the second request message. In this case, the non-access point station that obtains the second request message through listening may determine, based on a status of the non-access point station, whether to assist the first access point in setting up sensing. If the non-access point station that receives the second request message determines to assist the first access point in setting up sensing, the non-access point station transmits the sensing measurement query message to the first access point, so that the first access point learns about existence of the non-access point station, and initiates the sensing measurement session to the non-access point station.

S404: The non-access point station transmits the sensing measurement query message to the first access point.

Correspondingly, the first access point receives the sensing measurement query message from the non-access point station. The non-access point station transmits the sensing measurement query message to the first access point before the second moment based on the second time information, or the non-access point station transmits the sensing measurement query message to the first access point within the second duration based on the second time information after receiving the second request message.

The sensing measurement query message includes identification information of the second access point, and the identification information of the second access point may be a BSSID of a BSS in which the second access point is located. In this way, the first access point may determine an access point from which the non-access point station comes.

If the first response message transmitted by the second access point to the first access point includes the identification information of the non-access point station of the second access point, the first access point may directly initiate the sensing measurement session to the non-access point station indicated by the first response message, or initiate the sensing measurement request message to the non-access point station indicated by the first response message. In this case, the non-access point station does not need to transmit the sensing measurement query message to the first access point. Therefore, S404 is not a mandatory step, and is shown by using a dashed line in FIG. 4.

After transmitting the sensing measurement query message, the non-access point station does not enter a sleep state or is in an active state before the first access point transmits the sensing measurement request message (that is, the first moment), to avoid missing the sensing measurement request message of the first access point as much as possible. Similarly, when the second time information is the second duration, after transmitting the sensing measurement query message, the non-access point station does not enter the sleep state or is in the active state within the second duration.

S405: The first access point initiates the sensing measurement session to the non-access point station.

The first access point learns about the non-access point station that can assist the first access point in setting up sensing, and initiates the sensing measurement session to the non-access point station, for example, transmits a sensing measurement request message to the non-access point. The non-access point station transmits a sensing measurement response message to the first access point in response to the sensing measurement request message. It may be understood that, if the first response message transmitted by the second access point to the first access point includes the identification information of the non-access point station participating in sensing measurement performed by the first access point, the first access point transmits, based on the identification information, the sensing measurement request message to the non-access point station that assists the first access point in performing sensing measurement.

For a procedure in which the first access point initiates the sensing measurement session to the non-access point station, refer to a current procedure in which an access point initiates a sensing measurement session. Details are not described herein.

In the sensing method, the first access point requests the second access point to assist in performing sensing measurement, so that a station associated with the second access point can clearly learn, through the second access point, that the first access point needs a sensing responder, and assists the first access point in setting up sensing.

In a possible scenario, one station (for example, a first station) may receive probe response messages from a plurality of access points, and a probe response message of each access point includes time window information for performing sensing measurement by the access point. The first station can assist one or more of the plurality of access points in setting up sensing. In this case, the first station may determine, based on the time window information carried in the probe response message of each access point, which access point that the first station assists in setting up sensing. For example, the first station can assist the first access point in the plurality of access points in setting up sensing. Time window information of the first station matches the time window in which the first access point performs sensing measurement. In other words, if the time window of the first station meets a requirement of the time window in which the first access point performs sensing measurement, the first station may transmit a sensing measurement query message to the first access point.

The following describes possible frame structures of the first request message, the first response message, the second request message, and the sensing measurement query message in this embodiment of this application.

In this embodiment of this application, information exchanged between access points may be carried in a management frame in the 802.11 protocol, or certainly, may be carried in another possible frame structure. This is not limited in this embodiment of this application. The following describes possible frame structures of the first request message and the first response message by using an example in which the information exchanged between the access points is carried in the management frame in the 802.11 protocol.

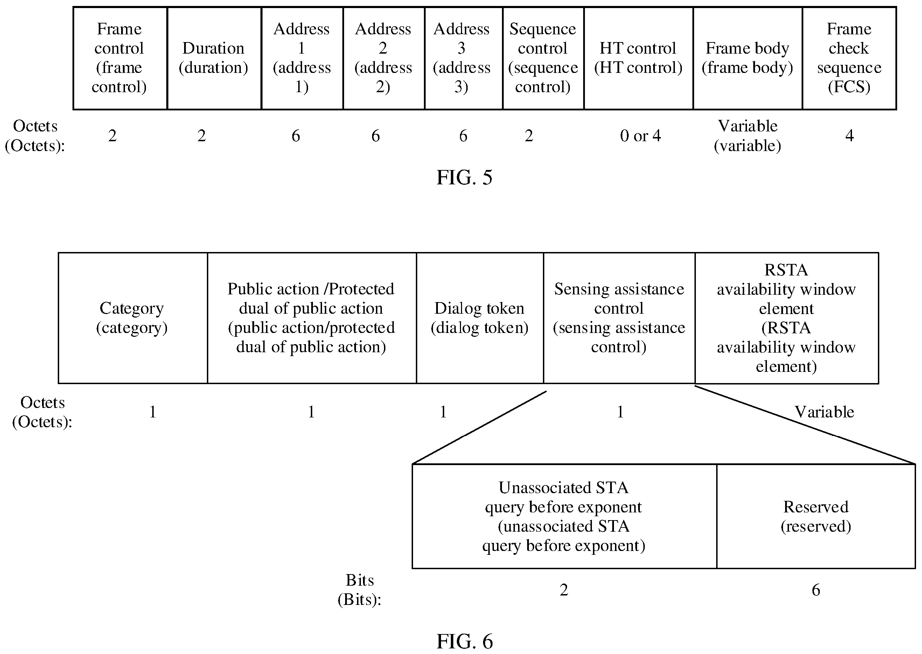

FIG. 5 shows a structure of the management frame in the 802.11 protocol. The management frame includes a frame control (frame control) field, a duration (duration) field, an address 1 (address 1) field, an address 2 (address 2) field, an address 3 (address 3) field, a sequence control (sequence control) field, an HT control (High throughput control, HT control) field, a frame body (frame body) field, and a frame check sequence (frame check sequence, FCS) field. For a meaning of each field in the management frame and a number of occupied bits/octets of each field, refer to a stipulation in the 802.11 protocol. Details are not described herein.

In this embodiment of this application, the first request message may include a first field, and the first field is used to carry the first time information. Alternatively, the first request message includes a first field and a second field, the first field is used to carry the first time information, and the second field is used to carry the time window information for performing sensing measurement by the first access point. Alternatively, the first request message includes a first field, a second field, and a third field, and a value of the third field is a first value. If the first request message includes the third field, and the value of the third field is a second value, the first request message does not include the second field.

In an implementation, the first request message may further include a fourth field, and the fourth field is used to carry the number of stations that the first access point needs to request.

In an implementation, the first request message further includes a fifth field, and the fifth field finally carries the indication information.

In a possible implementation, a frame structure of the first request message may be shown in FIG. 6. The first request message includes a category (category), a public action/protected dual of public action (public action/protected dual of public action), a dialog token (dialog token), sensing assistance control (sensing assistance control), and an RSTA availability window element (RSTA availability window element). The category field may indicate a category of the message; the public action/protected dual of public action field may indicate an action of the message; and the dialog token may identify a dialog, for example, a pair of request (request) and response (response) that correspond to each other may have a same dialog token. A number of bits and a number of octets occupied by the fields in FIG. 6 are merely examples. The number of bits and the number of octets occupied by the fields in FIG. 6 are not limited in this embodiment of this application.

The RSTA availability window element field is the second field, and may be an RSTA availability window element in the 802.1 1bf protocol. Details are not described herein.

In an implementation, the first request message may not include the RSTA availability window element. In other words, the structure shown in FIG. 6 may not include the RSTA availability window element field.

In an implementation, the first request message further includes the third field, that is, the structure shown in FIG. 6 may further include the third field (not shown in FIG. 6). When a value of the third field is a first value, the structure shown in FIG. 6 includes the RSTA availability window element field. When a value of the third field is a second value, the structure shown in FIG. 6 does not include the RSTA availability window element field. The third field may be located after the sensing assistance control field.

The first field is used to carry the first time information, and may be referred to as an unassociated STA query before exponent field. A specific name of the first field is not limited in this embodiment of this application. The first field may be included in the sensing assistance field. For example, in FIG. 6, the sensing assistance control field includes the unassociated STA query before exponent field and a reserved field.

In an implementation, the third field is any bit in the reserved field in FIG. 6. The frame structure of the first request message shown in FIG. 6 is merely an example. For example, the first request message may be a frame structure obtained by replacing the frame body field in FIG. 5 with the content in FIG. 6. In addition, a specific location of each field in FIG. 6 is not limited in this embodiment of this application. For example, the sensing assistance control field may be located before the RSTA availability window element field, or may be located after the RSTA availability window element field.

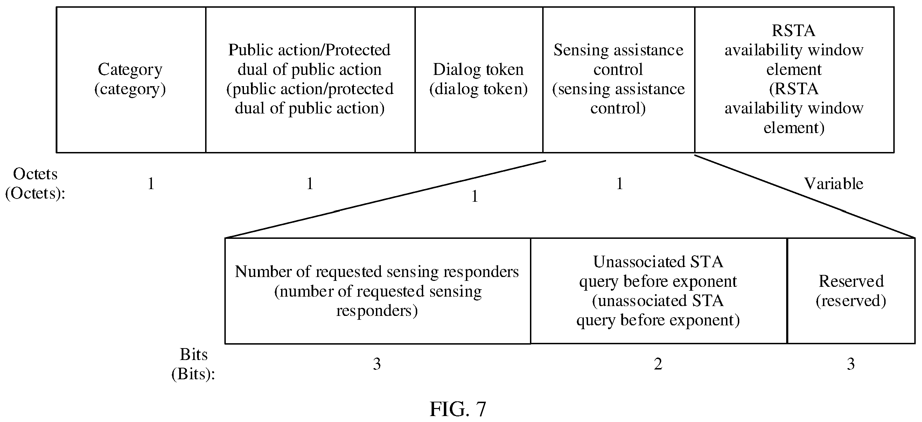

The fourth field is used to carry the number of stations that need to be requested by the first access point, and may be referred to as a number of requested sensing responders (number of requested sensing responders) field. A specific name of the fourth field is not limited in this embodiment of this application. As shown in FIG. 7, the sensing assistance control field includes the number of requested sensing responders field, the unassociated STA query before exponent field, and the reserved field. Specific locations of the plurality of fields included in the sensing assistance control field are not limited in this embodiment of this application. In addition, a number of bits and a number of octets occupied by the fields included in the sensing assistance control field in FIG. 7 are merely examples. The number of bits and the number of octets occupied by the fields included in the sensing assistance control field in FIG. 7 are not limited in this embodiment of this application.

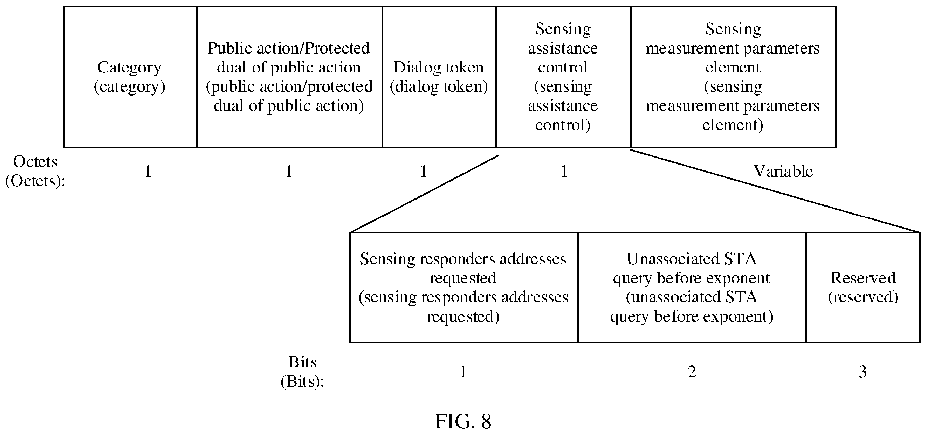

As described above, the first request message may include the sensing measurement parameter. The sensing measurement parameter includes the time window information for performing sensing measurement. Therefore, in this case, the first request message may include the sensing measurement parameter, and may not include the second field. For example, refer to FIG. 8. The first request message may include a category (category), a public action/protected dual of public action (public action/protected dual of public action), a dialog token (dialog token), sensing assistance control (sensing assistance control), and a sensing measurement parameters element (sensing measurement parameters element).

In this case, the first request message may further include the indication information. The fifth field is used to carry the indication information, and may also be referred to as a sensing responders addresses requested (sensing responders addresses requested) field. A specific name of the fifth field is not limited in this embodiment of this application. As shown in FIG. 8, the sensing assistance control field includes the sensing responders addresses requested field, the unassociated STA query before exponent field, and the reserved field. Specific locations of the plurality of fields included in the sensing assistance control field are not limited in this embodiment of this application. In addition, a number of bits and a number of octets occupied by the fields included in the sensing assistance control field in FIG. 8 are merely examples. The number of bits and the number of octets occupied by the fields included in the sensing assistance control field in FIG. 8 are not limited in this embodiment of this application.

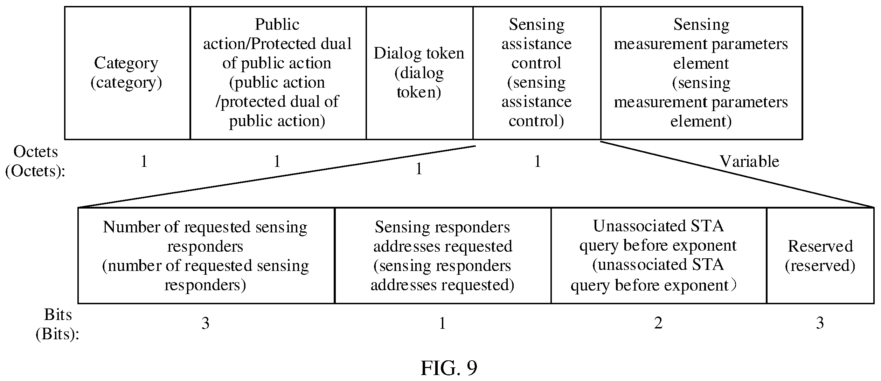

In an implementation, as shown in FIG. 9, the sensing assistance control field includes the number of requested sensing responders field, the sensing responders addresses requested field, the unassociated STA query before exponent field, and the reserved field. Specific locations of the plurality of fields included in the sensing assistance control field are not limited in this embodiment of this application. In addition, a number of bits and a number of octets occupied by the fields included in the sensing assistance control field in FIG. 9 are merely examples. The number of bits and the number of octets occupied by the fields included in the sensing assistance control field in FIG. 9 are not limited in this embodiment of this application.

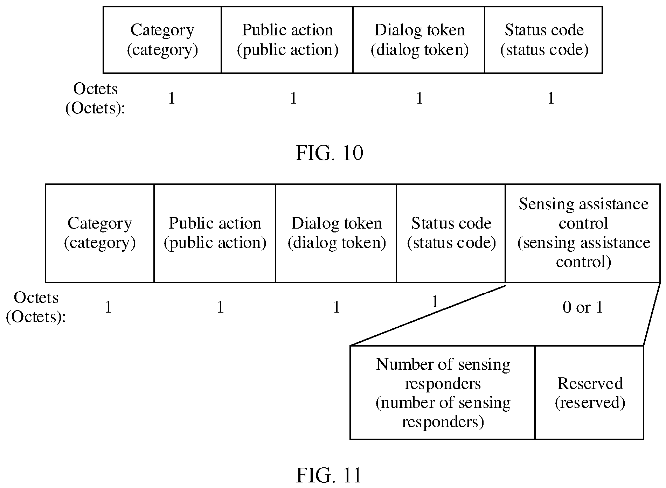

As shown in FIG. 10, the first response message may include fields such as a category (category), a public action/protected dual of public action (public action/protected dual of public action), a dialog token (dialog token), and a status code (status code). The status code field may indicate whether the second access point accepts the first request message. For example, if the status code field is set to SUCCESS, it indicates that the second access point accepts the first request message; or if the status code field is set to REQUEST_DECLINED, it indicates that the second access point rejects the first request message.

In a possible scenario, the first response message includes a number of non-access point stations provided by the second access point. Correspondingly, the first response message includes a sixth field, and the sixth field is used to carry the number of non-access point stations provided by the second access point. A specific name of the sixth field is not limited in this embodiment of this application. For example, the sixth field may be referred to as a number of sensing responders field. In this case, the first response message may further include a sensing assistance control field, and the sixth field is included in the sensing assistance control field. For example, FIG. 11 is a diagram of a structure of the first response message. Compared with FIG. 10, the first response message further includes the sensing assistance control field, and the sensing assistance control field includes the number of sensing responders field and a reserved field. Specific locations of the plurality of fields included in the sensing assistance control field are not limited in this embodiment of this application. In addition, a number of bits and a number of octets occupied by the fields included in the sensing assistance control field in FIG. 11 are merely examples. The number of bits and the number of octets occupied by the fields included in the sensing assistance control field in FIG. 11 are not limited in this embodiment of this application.

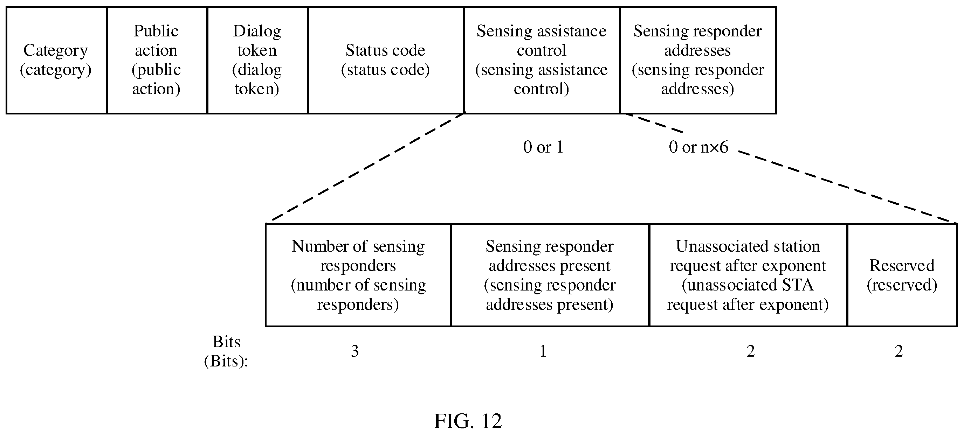

In an implementation, the first response message may further include identification information of an unassociated station provided by the second access point. Correspondingly, the first response message may further include a seventh field, and the seventh field is used to carry the identification information of the unassociated station provided by the second access point. A specific name of the seventh field is not limited in this embodiment of this application. For example, the seventh field may be referred to as a sensing responders addresses field. For example, FIG. 12 is another diagram of a structure of the first response message. Compared with FIG. 11, the first response message further includes the sensing responders addresses field.

In an implementation, the first response message further includes an eighth field, and the eighth field indicates whether the seventh field is present. The eighth field may be referred to as a sensing responder addresses present field, as shown in FIG. 12. When a value of the eighth field is a first value, the first response message includes the seventh field. When a value of the eighth field is a second value, the first response message does not include the seventh field.

In an implementation, the first response message further includes the third time information. Correspondingly, the first response message may further include a ninth field, and the ninth field is used to carry the third time information. A specific name of the ninth field is not limited in this embodiment of this application. For example, the ninth field may be referred to as an unassociated station query before exponent field, as shown in FIG. 12. A number of bits and a number of octets occupied by the fields in FIG. 12 are merely examples. The number of bits and the number of octets occupied by the fields in FIG. 12 are not limited in this embodiment of this application.

The following describes possible frame structures of the second request message and the sensing measurement query message.

The second request message may include a first field and a second field. The first field is used to carry the second time information, and the second field is used to carry the identification information of the first access point. Specific names of the first field and the second field are not limited in this embodiment of this application. For example, the first field may be referred to as an unassociated STA query before exponent field, and the second field is referred to as a requesting BSSID field.

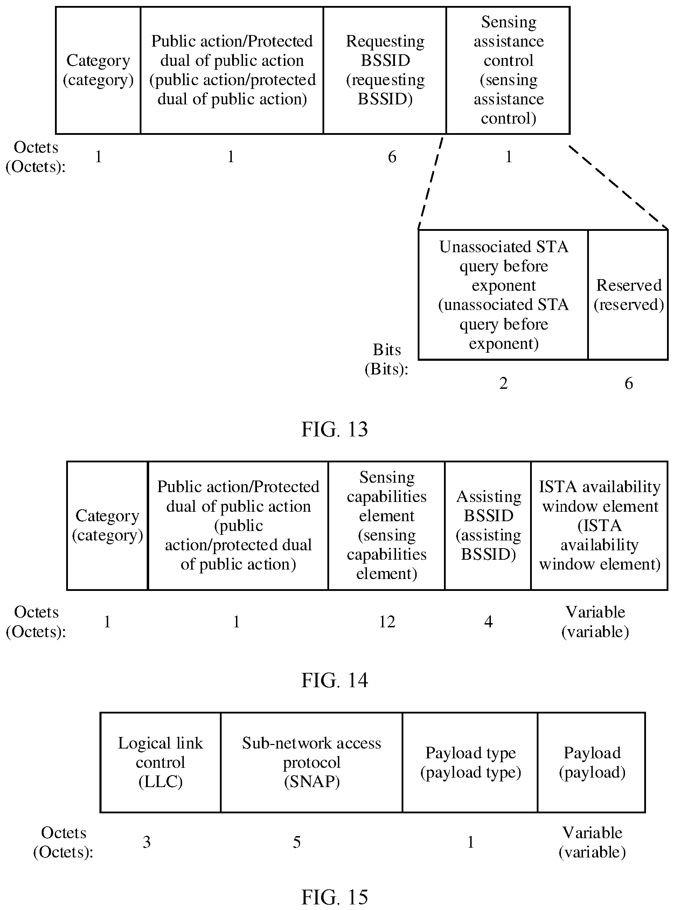

For example, FIG. 13 shows a structure of the second request message. As shown in FIG. 13, the second request message may include fields such as a category (category), a public action/protected dual of public action (public action/protected dual of public action), a requesting BSSID, and sensing assistance control. The sensing assistance control field may include an unassociated STA query before exponent field and a reserved field. A number of bits and a number of octets occupied by the fields in FIG. 13 are merely examples. The number of bits and the number of octets occupied by the fields in FIG. 13 are not limited in this embodiment of this application.

The sensing measurement query message may include an access point identifier field, and the access point identifier field is used to carry the identification information of the second access point. In a possible implementation, a field, for example, an assisting BSSID field, may be added to a structure of the sensing measurement query frame specified in the 802.1 1bf protocol, and is used as the access point identifier field to indicate the identification information of the second access point. A specific name of the access point identifier field is not limited in this embodiment of this application. For example, the access point identifier field is referred to as an assisting BSSID field.

For example, FIG. 14 shows a structure of the sensing measurement query message. As shown in FIG. 14, the sensing measurement query message may include fields such as a category (category), a public action/protected dual of public action (public action/protected dual of public action), a sensing capabilities element (sensing capabilities element), an assisting BSSID (assisting BSSID), and an ISTA availability window element. A number of bits and a number of octets occupied by the fields in FIG. 14 are merely examples. The number of bits and the number of octets occupied by the fields in FIG. 14 are not limited in this embodiment of this application.

The foregoing uses an example in which a structure of a management frame that is used between access points and that is specified in the 802.11bf protocol is used for information exchanged between the access points, and a format of a management frame is also used for information exchanged between an access point and a station. In a possible implementation, the information exchanged between the access points and the information exchanged between the access point and the station may use a frame format that is used for communication between a transmitter and a receiver and that is specified in the 802.11 series protocols. For example, the frame format may be a frame format of a MAC service data unit (MAC service data unit, MSDU).

FIG. 15 is a diagram of a frame structure of an MSDU. The MSDU may include fields such as logical link control (logical link control, LCC), a sub-network access protocol (sub-network access protocol, SNAP), a payload type (payload type), and a payload (payload). The LLC field may indicate that data carried in the MSDU is applied to a data link layer. The SNAP field is used to encapsulate the data carried in the MSDU. The payload type field may indicate a type of the data carried in the MSDU. The payload field is used to carry the data carried in the MSDU.

Content included in the first request message and content included in the first response message may be carried in the payload field. Correspondingly, a new payload type, for example, a sensing type, may be added, and the sensing type is indicated through the payload type field. For example, if a value of the payload type field is a third value, the payload type is the sensing type. For example, the third value is 5 or 6, or another possible value.

For example, one or more of the first time information, the time window information for performing sensing measurement by the first access point, the number of stations required by the first access point, the indication information, or the sensing measurement parameter may be carried in the payload field. For another example, the number of stations that are provided by the second access point and that participate in sensing measurement performed by the first access point or identification information of the stations may also be carried in the payload field.

It should be noted that the payload type (Payload type) field may be added to the frame structure in FIG. 15, to indicate a type of the payload field. For example, if the payload type field is a first value, the payload field carries sensing-related information.

The foregoing describes the method provided in this embodiment of this application from perspectives of exchange among the first access point, the second access point, and the non-access point station. The steps performed by the first access point may be implemented by different functional entities that form the first access point. The steps performed by the second access point may be implemented by different functional entities that form the second access point. The steps performed by the non-access point station may be implemented by different functional entities that form the non-access point station. To implement functions in the method provided in the foregoing embodiments of this application, the terminal device and the network device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

The following describes, with reference to the accompanying drawings, a communication apparatus for implementing the foregoing method in embodiments of this application. Therefore, all the foregoing content may be used in the following embodiments. Repeated content is not described again.

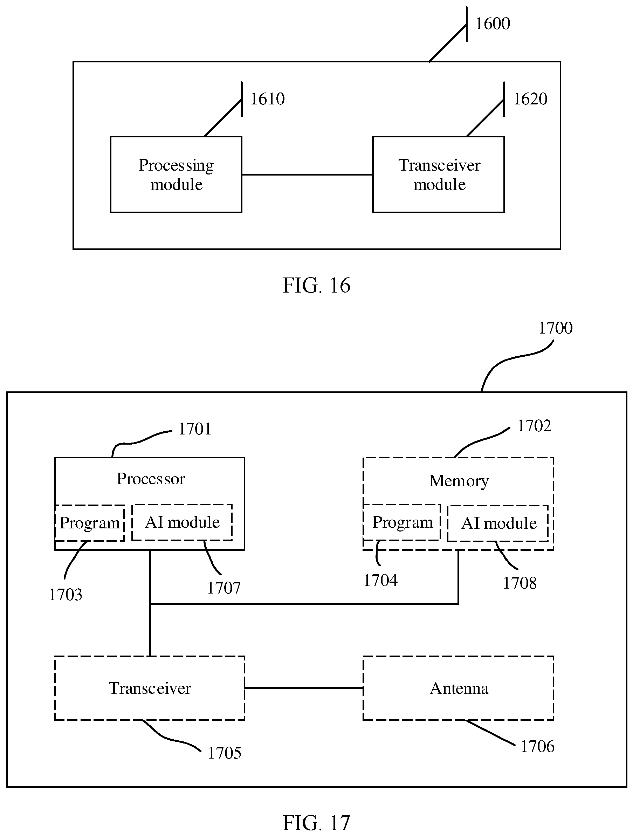

FIG. 16 is a block diagram of a communication apparatus 1600 according to an embodiment of this application. The communication apparatus 1600 may be the first access point, the second access point, or the non-access point station in the foregoing embodiments. For example, the communication apparatus 1600 may be the access point or the station in FIG. 1. Alternatively, the communication apparatus 1600 is a chip (system) in the first access point, a chip (system) in the second access point, or a chip (system) in the non-access point station. Alternatively, the communication apparatus 1600 is a software module of the first access point, the second access point, or the non-access point station. The communication apparatus 1600 may correspondingly implement functions or steps implemented by the first access point, the second access point, or the non-access point station in the foregoing method embodiments. The communication apparatus 1600 may include a processing module 1610 and a transceiver module 1620. Optionally, the communication apparatus may further include a storage module. The storage module may be configured to store instructions (code or a program) and/or data. The storage module may be, for example, a memory. The processing module 1610 and the transceiver module 1620 may be coupled to the storage module. For example, the processing module 1610 may read the instructions (code or program) and/or the data in the storage module, to implement a corresponding method. When the communication apparatus 1600 is the chip in the first access point, the second access point, or the non-access point station, the storage module may be a storage module in the chip, for example, a register or a cache. For example, the storage module may alternatively be a storage module that is in the network device/terminal device and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

In a possible implementation, the processing module 1610 may be a processor or a controller, for example, may be a general-purpose central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 1610 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 1620 is a transceiver, an interface circuit, a bus, a pin, or another possible communication interface, and is configured to receive a signal from another apparatus. For example, when the apparatus is implemented in a form of a chip, the transceiver module 1620 is an interface circuit used by the chip to receive a signal from another chip or apparatus, or is an interface circuit used by the chip to transmit a signal to another chip or apparatus.

In some possible implementations, the communication apparatus 1600 can correspondingly implement behavior and functions of the first access point in the foregoing method embodiments, for example, implement the method performed by the first access point in the sensing method. The communication apparatus 1600 may be the first access point, may be a component (for example, a chip or a circuit) used in the first access point, may be a chip, a chip set, or a part of a chip configured to perform a related method function in the first access point, or may be a software module that can implement the method performed by the first access point in the sensing method. This is not limited.

For example, the processing module 1610 may be configured to determine a first request message. The transceiver module 1620 is configured to: transmit the first request message to a second access point, receive a response message of the first request message, and transmit a sensing measurement request message to a station that assists the communication apparatus 1600 in performing sensing measurement. The first request message is used to request the second access point to assist the communication apparatus 1600 in performing sensing measurement.

In an optional implementation, the first request message includes first time information, and the first time information indicates time information for transmitting the sensing measurement request message by the communication apparatus 1600 or time information for initiating a sensing measurement session by the communication apparatus 1600.

In an optional implementation, the first time information is a first moment; or the first time information is first duration, where the first duration is duration between a first start moment and a moment at which the communication apparatus 1600 transmits the sensing measurement request message, and the first start moment is a transmitting moment of the first request message.

In an optional implementation, the first request message further includes time window information for performing sensing measurement by the communication apparatus 1600.

In an optional implementation, the first request message further includes a sensing measurement parameter, and the sensing measurement parameter is used by the communication apparatus 1600 to set up the sensing measurement session with the station.

In an optional implementation, the first request message further includes a number of stations requested by the communication apparatus 1600.

In an optional implementation, the response message of the first request message includes a number of stations provided by the second access point.

In an optional implementation, the first request message includes indication information, and the indication information is used to request the second access point to provide identification information of a station participating in sensing measurement initiated by the communication apparatus 1600.

In an optional implementation, the response message of the first request message includes identification information of the station provided by the second access point.

In an optional implementation, the second request message includes second time information and identification information of the first access point, where the second time information indicates time information for transmitting a sensing measurement query message by the station, or the second time information indicates the time information for transmitting the sensing measurement request in an optional implementation.

In an optional implementation, the second time information is a second moment; or the second time information is second duration, where the second duration is duration between a second start moment and the first moment, and the second start moment is a transmitting moment of the second request message.

In an optional implementation, the response message of the first request message further includes third time information, and the third time information indicates the time at which the communication apparatus 1600 transmits the sensing measurement request message.

In an optional implementation, the third time information is a third moment or third duration, where the third duration is duration between a third start moment and the moment at which the communication apparatus 1600 transmits the sensing measurement request message, and the third start moment includes a transmitting moment of the response message of the first request message.

In an optional implementation, the transceiver module 1620 is specifically configured to transmit, based on the identification information of the station and the third time information that are included in the response message of the first request message, the sensing measurement request message to the station that assists the first access point in performing sensing measurement.

In an optional implementation, before the transceiver module 1620 transmits the sensing measurement request message to the station that assists the communication apparatus 1600 in performing sensing measurement, the transceiver module 1620 is further configured to receive the sensing measurement query message transmitted by the station, where the sensing measurement query message includes identification information of the second access point.

In an optional implementation, the response message of the first request message includes the identification information of the station; and that the transceiver module 1620 transmits the sensing measurement request message to the station that assists the communication apparatus in performing sensing measurement includes: The transceiver module 1620 transmits, based on the identification information, the sensing measurement request message to the station that assists the communication apparatus 1600 in performing sensing measurement.

It should be understood that the communication apparatus 1600 may be configured to implement the steps performed by the first access point in the sensing method. For related features, refer to the foregoing embodiments. Details are not described herein again.

In some possible implementations, the communication apparatus 1600 can correspondingly implement behavior and functions of the second access point in the foregoing method embodiments, for example, implement the method performed by the second access point in the sensing method. The communication apparatus 1600 may be the second access point, may be a component (for example, a chip or a circuit) used in the second access point, may be a chip, a chip set, or a part of a chip configured to perform a related method function in the second access point, or may be a software module that can implement the method performed by the second access point in the sensing method. This is not limited.

For example, the transceiver module 1620 is configured to: receive a first request message from a first access point, transmit a response message of the first request message, and transmit a second request message to a station associated with the second access point. The first request message is used to request the communication apparatus 1600 to assist the first access point in performing sensing measurement. The second request message is used to request the station associated with the communication apparatus 1600 to participate in a sensing measurement session initiated by the first access point.

In an optional implementation, the first request message includes first time information, and the first time information indicates time information for transmitting a sensing measurement request message by the communication apparatus 1600 or time information for initiating a sensing measurement session by the communication apparatus 1600.

In an optional implementation, the first time information is a first moment; or the first time information is first duration, where the first duration is duration between a first start moment and a moment at which the first access point transmits the sensing measurement request message, and the first start moment is a transmitting moment of the first request message.

In an optional implementation, the first request message further includes time window information for performing sensing measurement by the first access point.

In an optional implementation, the first request message further includes a sensing measurement parameter, and the sensing measurement parameter is used by the communication apparatus 1600 to set up the sensing measurement session with the station.

In an optional implementation, the first request message further includes a number of stations requested by the first access point.

In an optional implementation, the response message of the first request message includes a number of stations provided by the communication apparatus 1600.

In an optional implementation, the first request message includes indication information, and the indication information is used to request the communication apparatus 1600 to provide identification information of a station participating in sensing measurement initiated by the first access point.

In an optional implementation, the response message of the first request message includes identification information of the station provided by the communication apparatus 1600.

In an optional implementation, the second request message includes second time information and identification information of the first access point, where the second time information indicates time information for transmitting a sensing measurement query message by the station, or the second time information indicates the time information for transmitting the sensing measurement request in an optional implementation.

In an optional implementation, the second time information is a second moment; or the second time information is second duration, where the second duration is duration between a second start moment and the first moment, and the second start moment is a transmitting moment of the second request message.

In an optional implementation, the response message of the first request message further includes third time information, and the third time information indicates time at which the first access point transmits the sensing measurement request message.

In an optional implementation, the third time information is a third moment or third duration, where the third duration is duration between a third start moment and the moment at which the first access point transmits the sensing measurement request message, and the third start moment includes a transmitting moment of the response message of the first request message.

It should be understood that the communication apparatus 1600 may be configured to implement the steps performed by the second access point in the sensing method. For related features, refer to the foregoing embodiments. Details are not described herein again.

In some possible implementations, the communication apparatus 1600 can correspondingly implement behavior and functions of the non-access point station in the foregoing method embodiments, for example, implement the method performed by the non-access point station in the sensing method. The communication apparatus 1600 may be the non-access point station, may be a component (for example, a chip or a circuit) used in the non-access point station, may be a chip, a chip set, or a part of a chip configured to perform a related method function in the non-access point station, or may be a software module that can implement the method performed by the non-access point station in the sensing method. This is not limited.

For example, the transceiver module 1620 may be configured to: receive a second request message from a second access point, and transmit a sensing measurement query message to a first access point, or receive a sensing measurement request message transmitted by a first access point. The second request message is used to request a station associated with the second access point to participate in a sensing measurement session initiated by the first access point. The sensing measurement query message includes identification information of the second access point.

In an optional implementation, the second request message includes second time information and identification information of the first access point, where the second time information indicates time information for transmitting the sensing measurement query message by the station, or the second time information indicates time information for transmitting the sensing measurement request message by the first access point.

In an optional implementation, the second time information is a second moment, and that the transceiver module 1620 transmits the sensing measurement query message to the first access point includes: The transceiver module 1620 transmits the sensing measurement query message to the first access point at the second moment.

In an optional implementation, the second time information is second duration, and that the transceiver module 1620 transmits the sensing measurement query message to the first access point includes: The transceiver module 1620 transmits the sensing measurement query message to the first access point at an interval of the second duration from a second start moment, where the second start moment is a transmitting moment of the second request message.

In an optional implementation, the second time information is a second moment, and the station does not enter a sleep state before the first access point transmits the sensing measurement request message; or the second time information is second duration, and the station does not enter a sleep state within the second duration, where the second start moment is a receiving moment of the second request message.

For another example, the transceiver module 1620 is configured to: receive a probe response message from at least one access point, and transmit a sensing measurement query message to a first access point in the at least one access point. A probe response message of each access point includes time window information for performing sensing measurement by the access point. A time window of the communication apparatus 1600 matches time window information of the first access point. Alternatively, the first access point is determined by a first station based on a time window of each access point.

It should be understood that the communication apparatus 1600 may be configured to implement the steps performed by the non-access point station in the sensing method. For related features, refer to the foregoing embodiments. Details are not described herein again.

When the communication apparatus 1600 is a chip-type apparatus or circuit, the transceiver module may be an input/output circuit and/or a communication interface, and the processing module is an integrated processor, a microprocessor, or an integrated circuit.

FIG. 17 is a block diagram of a communication apparatus 1700 according to an embodiment of this application. The communication apparatus 1700 may be the network apparatus or the terminal apparatus in the foregoing embodiments. For example, the communication apparatus 1700 may be the access point or the station in FIG. 1, or the communication apparatus 1700 is a chip (system) in the access point or the station. In this embodiment of this application, the chip system may include a chip, or may include a chip and another discrete component. For a specific function, refer to the descriptions in the foregoing method embodiments.

The communication apparatus 1700 includes one or more processors 1701, configured to implement or support the communication apparatus 1700 in implementing a function of the first access point, the second access point, or the non-access point station in the sensing method provided in embodiments of this application. For details, refer to detailed descriptions in the example of the sensing method. Details are not described herein again. The processor 1701 may also be referred to as a processing unit or a processing module, and may implement a specific control function. The processor 1701 may be a general-purpose processor, a dedicated processor, or the like, for example, includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to: control the communication apparatus 1700 (for example, a first access point, a second access point, or a non-access point station), execute a software program, and/or process data. Different processors may be independent components, or may be integrated into one or more processors, for example, integrated into one or more application-specific integrated circuits.

In a design, the processor 1701 may include a program 1703 (which may also be referred to as code or instructions sometimes). The program 1703 may be run on the processor 1701, to enable the communication apparatus 1700 to perform the method described in the following embodiments. In another possible design, the communication apparatus 1700 includes a circuit (not shown in FIG. 17). The circuit is configured to implement a function of the first access point, the second access point, or the non-access point station in the foregoing embodiments.

In a design, the communication apparatus 1700 may include one or more memories 1702. The memory 1702 stores a program 1704 (which may also be referred to as code or instructions sometimes), and the program 1704 may be run on the processor 1701, to enable the communication apparatus 1700 to perform the method described in the foregoing method embodiments, for example, the procedure shown in FIG. 4.

In a design, the processor 1701 and/or the memory 1702 may include an artificial intelligence (artificial intelligence, AI) module 1707 and an AI module 1708. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 1701 and/or the memory 1702 may further store data. The processor and the memory may be separately disposed, or may be integrated together.

In a possible design, the communication apparatus 1700 may further include a transceiver 1705 and/or an antenna 1706. The processor 1701 may also be referred to as a processing unit sometimes, and controls the communication apparatus 1700. The transceiver 1705 may also be sometimes referred to as a transceiver unit, a transceiver device, a transceiver circuit, a transceiver, or the like, and is configured to implement a transceiver function of the communication apparatus through the antenna 1706.

In a possible design, the communication apparatus 1700 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1700 may include more or fewer components, some components may be integrated, or some components may be split. The components may be implemented by hardware, software, or a combination of software and hardware.

The communication apparatus in the foregoing embodiment may be an access point or a station, may be a chip applied to the access point or the station, or may be another combined component, component, or the like having the foregoing access point. When the communication apparatus is an access point or a station, the transceiver module may be a transceiver, and may include an antenna, a radio frequency circuit, and the like, and the processing module may be a processor, for example, a CPU. When the communication apparatus is a component that has a function of the access point or the station, the transceiver module may be a radio frequency unit, and the processing module may be a processor. When the communication apparatus is a chip system, the communication apparatus may be an FPGA, a dedicated ASIC, a system on a chip (system on a chip, SoC), a CPU, a network processor (network processor, NP), a DSP, a micro controller unit (micro controller unit, MCU), a programmable controller (programmable logic device, PLD), or another integrated chip; the processing module may be a processor of the chip system; and the transceiver module or a communication interface may be an input/output interface or an interface circuit of the chip system. For example, the interface circuit may be a code/data read/write interface circuit. The interface circuit may be configured to: receive code instructions (the code instructions are stored in the memory, and may be directly read from the memory, or may be read from the memory through another component), and transmit the code instructions to the processor. The processor may be configured to run the code instructions to perform the method in the foregoing method embodiments. For another example, the interface circuit may alternatively be a signal transmission interface circuit between a communication processor and a transceiver device.

An embodiment of this application further provides a communication system. Specifically, the communication system includes a plurality of access points and at least one station. For example, the communication system includes an access point configured to implement an access point-related function in the foregoing sensing method and a station configured to implement a non-access point station-related function in the foregoing sensing method. For details, refer to related descriptions in the foregoing method embodiment. Details are not described herein again.

An embodiment of this application further provides a computer-readable storage medium, including instructions. When the instructions are run on a computer, the computer is enabled to perform the method performed by the first access point, the second access point, or the non-access point station in the sensing method.

An embodiment of this application further provides a computer program product, including instructions. When the instructions are run on a computer, the computer is enabled to perform the method performed by the first access point, the second access point, or the non-access point station in the sensing method.

An embodiment of this application provides a chip system. The chip system includes a processor, may further include a memory, and is configured to implement functions of the first access point, the second access point, or the non-access point station in the foregoing method. The chip system may include a chip, or may include a chip and another discrete component.

To implement functions of the communication apparatuses in FIG. 16 and FIG. 17, an embodiment of this application further provides a chip, including a processor, configured to support the communication apparatus in implementing functions related to the first access point, the second access point, or the non-access point station in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, illustrative logical blocks (illustrative logical blocks) and steps (steps) described with reference to embodiments disclosed in this specification may be implemented by electronic hardware, computer software, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, for example, a USB flash drive, a removable hard disk, a read-only memory (read-only memory, ROM), a RAM, a magnetic disk, or an optical disc.

## Claims

1. A sensing method, wherein the method comprises:
receiving a first request message from a first access point, wherein the first request message is used to request a second access point to assist the first access point in performing sensing measurement;
transmitting a response message of the first request message; and
transmitting a second request message to a station associated with the second access point, wherein the second request message is used to request the station to participate in a sensing measurement session initiated by the first access point.

2. The method according to claim 1, wherein the first request message comprises first time information, and the first time information indicates time information for transmitting a sensing measurement request message by the first access point or time information for initiating the sensing measurement session by the first access point.

3. The method according to either claim 1 or 2, wherein the first time information is a first moment; or
the first time information is first duration, wherein the first duration is duration between a first start moment and a moment at which the first access point transmits the sensing measurement request message, and the first start moment is a transmitting moment of the first request message.

4. The method according to any one of claims 1 to 3, wherein the first request message further comprises time window information for performing sensing measurement by the first access point.

5. The method according to any one of claims 1 to 4, wherein the first request message further comprises a sensing measurement parameter, and the sensing measurement parameter is used by the first access point to set up the sensing measurement session with the station.

6. The method according to any one of claims 1 to 5, wherein the first request message further comprises a number of stations requested by the first access point.

7. The method according to claim 6, wherein the response message of the first request message comprises a number of stations provided by the second access point.

8. The method according to any one of claims 5 to 7, wherein the first request message comprises indication information, and the indication information is used to request the second access point to provide identification information of a station participating in sensing measurement initiated by the first access point.

9. The method according to any one of claims 5 to 8, wherein the response message of the first request message comprises identification information of the station provided by the second access point.

10. The method according to any one of claims 1 to 9, wherein the second request message comprises second time information and identification information of the first access point; and the second time information indicates time information for transmitting a sensing measurement query message by the station, or the second time information indicates the time information for transmitting the sensing measurement request message by the first access point.

11. The method according to claim 10, wherein the second time information is a second moment; or the second time information is second duration, wherein the second duration is duration between a second start moment and the first moment, and the second start moment is a transmitting moment of the second request message.

12. A sensing method, wherein the method comprises:
transmitting a first request message to a second access point, wherein the first request message is used to request the second access point to assist a first access point in performing sensing measurement;
receiving a response message of the first request message; and
transmitting a sensing measurement request message to a station that assists the first access point in performing sensing measurement.

13. The method according to claim 12, wherein the first request message comprises first time information, and the first time information indicates time information for transmitting the sensing measurement request message by the first access point or time information for initiating a sensing measurement session by the first access point.

14. The method according to either claim 12 or 13, wherein the first time information is a first moment; or
the first time information is first duration, wherein the first duration is duration between a first start moment and a moment at which the first access point transmits the sensing measurement request message, and the first start moment is a transmitting moment of the first request message.

15. The method according to any one of claims 12 to 14, wherein the first request message further comprises time window information for performing sensing measurement by the first access point.

16. The method according to any one of claims 12 to 15, wherein the first request message further comprises a sensing measurement parameter, and the sensing measurement parameter is used by the first access point to set up the sensing measurement session with the station.

17. The method according to any one of claims 12 to 16, wherein the first request message further comprises a number of stations requested by the first access point.

18. The method according to claim 17, wherein the response message of the first request message comprises a number of stations provided by the second access point.

19. The method according to any one of claims 15 to 18, wherein the first request message comprises indication information, and the indication information is used to request the second access point to provide identification information of a station participating in sensing measurement initiated by the first access point.

20. The method according to any one of claims 15 to 19, wherein the response message of the first request message comprises identification information of the station provided by the second access point.

21. The method according to any one of claims 12 to 20, wherein the second request message comprises second time information and identification information of the first access point; and the second time information indicates time information for transmitting a sensing measurement query message by the station, or the second time information indicates the time information for transmitting a sensing measurement request by the first access point.

22. The method according to claim 21, wherein the second time information is a second moment; or the second time information is second duration, wherein the second duration is duration between a second start moment and the first moment, and the second start moment is a transmitting moment of the second request message.

23. The method according to any one of claims 12 to 22, wherein before transmitting the sensing measurement request message to the station that assists the first access point in performing sensing measurement, the method further comprises:
receiving the sensing measurement query message transmitted by the station, wherein the sensing measurement query message comprises identification information of the second access point.

24. The method according to any one of claims 12 to 22, wherein the response message of the first request message comprises identification information of the station; and transmitting the sensing measurement request message to the station that assists the first access point in performing sensing measurement comprises: transmitting, based on the identification information, the sensing measurement request message to the station that assists the first access point in performing sensing measurement.

25. A sensing method, comprising:
receiving a second request message from a second access point, wherein the second request message is used to request a station associated with the second access point to participate in a sensing measurement session initiated by a first access point; and
transmitting a sensing measurement query message to the first access point, wherein the sensing measurement query message comprises identification information of the second access point; or receiving a sensing measurement request message transmitted by the first access point.

26. The method according to claim 25, wherein the second request message comprises second time information and identification information of the first access point; and the second time information indicates time information for transmitting the sensing measurement query message by the station, or the second time information indicates time information for transmitting the sensing measurement request message by the first access point.

27. The method according to claim 26, wherein the second time information is a second moment, and transmitting the sensing measurement query message to the first access point comprises: transmitting the sensing measurement query message to the first access point at the second moment; or
the second time information is second duration, and transmitting the sensing measurement query message to the first access point comprises: transmitting the sensing measurement query message to the first access point within the second duration from a second start moment, wherein the second start moment is a transmitting moment of the second request message.

28. The method according to claim 25, wherein the second time information is a second moment, and the station does not enter a sleep state before the first access point transmits the sensing measurement request message; or the second time information is second duration, and the station does not enter a sleep state within the second duration, wherein the second start moment is a transmitting moment of the second request message.

29. A sensing method, comprising:
receiving, by a first station, a probe response message from at least one access point, wherein a probe response message of each access point comprises time window information for performing sensing measurement by the access point; and
transmitting, by the first station, a sensing measurement query message to a first access point in the at least one access point, wherein time window information of the first station matches a time window in which the first access point performs sensing measurement.

30. A communication apparatus, wherein the method comprises:
a transceiver module, configured to: receive a first request message from a first access point, transmit a response message of the first request message, and transmit a second request message to a station associated with the communication apparatus, wherein the first request message is used to request the communication apparatus to assist the first access point in performing sensing measurement, and the second request message is used to request the station to participate in a sensing measurement session initiated by the first access point; and
the processing module, configured to determine the second request message.

31. The apparatus according to claim 30, wherein the first request message comprises first time information, and the first time information indicates time information for transmitting a sensing measurement request message by the first access point or time information for initiating the sensing measurement session by the first access point.

32. The apparatus according to either claim 30 or 31, wherein
the first time information is a first moment; or
the first time information is first duration, wherein the first duration is duration between a first start moment and a moment at which the first access point transmits the sensing measurement request message, and the first start moment is a transmitting moment of the first request message.

33. The apparatus according to any one of claims 30 to 32, wherein the first request message further comprises time window information for performing sensing measurement by the first access point.

34. The apparatus according to any one of claims 30 to 33, wherein the first request message further comprises a sensing measurement parameter, and the sensing measurement parameter is used by the first access point to set up the sensing measurement session with the station.

35. The apparatus according to any one of claims 30 to 34, wherein the first request message further comprises a number of stations requested by the first access point.

36. The apparatus according to claim 35, wherein the response message of the first request message comprises a number of stations provided by the communication apparatus.

37. The apparatus according to any one of claims 34 to 36, wherein the first request message comprises indication information, and the indication information is used to request the communication apparatus to provide identification information of a station participating in sensing measurement initiated by the first access point.

38. The apparatus according to any one of claims 34 to 37, wherein the response message of the first request message comprises identification information of the station provided by the communication apparatus.

39. The apparatus according to any one of claims 30 to 38, wherein the second request message comprises second time information and identification information of the first access point; and the second time information indicates time information for transmitting a sensing measurement query message by the station, or the second time information indicates the time information for transmitting the sensing measurement request message by the first access point.

40. The apparatus according to claim 39, wherein the second time information is a second moment; or the second time information is second duration, wherein the second duration is duration between a second start moment and the first moment, and the second start moment is a transmitting moment of the second request message.

41. A communication apparatus, wherein the method comprises:
a transceiver module, configured to: transmit a first request message to a second access point, receive a response message of the first request message, and transmit a sensing measurement request message to a station that assists the communication apparatus in performing sensing measurement, wherein the first request message is used to request the second access point to assist the communication apparatus in performing sensing measurement; and
a processing module, configured to determine the first request message.

42. The apparatus according to claim 41, wherein the first request message comprises first time information, and the first time information indicates time information for transmitting the sensing measurement request message by the communication apparatus or time information for initiating a sensing measurement session by the communication apparatus.

43. The apparatus according to either claim 41 or 42, wherein the first time information is a first moment; or
the first time information is first duration, wherein the first duration is duration between a first start moment and a moment at which the communication apparatus transmits the sensing measurement request message, and the first start moment is a transmitting moment of the first request message.

44. The apparatus according to any one of claims 41 to 43, wherein the first request message further comprises time window information for performing sensing measurement by the communication apparatus.

45. The apparatus according to any one of claims 41 to 44, wherein the first request message further comprises a sensing measurement parameter, and the sensing measurement parameter is used by the communication apparatus to set up the sensing measurement session with the station.

46. The apparatus according to any one of claims 41 to 45, wherein the first request message further comprises a number of stations requested by the communication apparatus.

47. The apparatus according to claim 46, wherein the response message of the first request message comprises a number of stations provided by the second access point.

48. The apparatus according to any one of claims 44 to 47, wherein the first request message comprises indication information, and the indication information is used to request the second access point to provide identification information of a station participating in sensing measurement initiated by the communication apparatus.

49. The apparatus according to any one of claims 44 to 48, wherein the response message of the first request message comprises identification information of the station provided by the second access point.

50. The apparatus according to any one of claims 41 to 49, wherein the second request message comprises second time information and identification information of the communication apparatus; and the second time information indicates time information for transmitting a sensing measurement query message by the station, or the second time information indicates the time information for transmitting a sensing measurement request by the communication apparatus.

51. The apparatus according to claim 50, wherein the second time information is a second moment; or the second time information is second duration, wherein the second duration is duration between a second start moment and the first moment, and the second start moment is a transmitting moment of the second request message.

52. The apparatus according to any one of claims 41 to 51, wherein before transmitting the sensing measurement request message to the station that assists the communication apparatus in performing sensing measurement, the transceiver module is further configured to:
receive the sensing measurement query message transmitted by the station, wherein the sensing measurement query message comprises identification information of the second access point.

53. The apparatus according to any one of claims 41 to 51, wherein the response message of the first request message comprises the identification information of the station; and transmitting the sensing measurement request message to the station that assists the communication apparatus in performing sensing measurement comprises: transmitting, based on the identification information, the sensing measurement request message to the station that assists the communication apparatus in performing sensing measurement.

54. A communication apparatus, comprising:
a transceiver module, configured to: receive a second request message from a second access point, and transmit a sensing measurement query message to a first access point, or receive a sensing measurement request message transmitted by a first access point, wherein the second request message is used to request a station associated with the second access point to participate in a sensing measurement session initiated by the first access point, and the sensing measurement query message comprises identification information of the second access point; and
the processing module, configured to determine the sensing measurement query message.

55. The apparatus according to claim 54, wherein the second request message comprises second time information and identification information of the first access point; and the second time information indicates time information for transmitting the sensing measurement query message by the communication apparatus, or the second time information indicates time information for transmitting the sensing measurement request message by the first access point.

56. The apparatus according to claim 55, wherein the second time information is a second moment, and transmitting the sensing measurement query message to the first access point comprises: transmitting the sensing measurement query message to the first access point at the second moment; or
the second time information is second duration, and transmitting the sensing measurement query message to the first access point comprises: transmitting the sensing measurement query message to the first access point within the second duration from a second start moment, wherein the second start moment is a transmitting moment of the second request message.

57. The apparatus according to claim 54, wherein the second time information is a second moment, and the station does not enter a sleep state before the first access point transmits the sensing measurement request message; or the second time information is second duration, and the station does not enter a sleep state within the second duration, wherein the second start moment is a transmitting moment of the second request message.

58. A communication apparatus, comprising:
a transceiver module, configured to: receive a probe response message from at least one access point, and transmit a sensing measurement query message to a first access point in the at least one access point, wherein a probe response message of each access point comprises time window information for performing sensing measurement by the access point, and time window information of the communication apparatus matches a time window in which the first access point performs sensing measurement; and
a processing module, configured to determine the sensing measurement query message.

59. A communication apparatus, comprising a module for performing the method according to any one of claims 1 to 11, a module for performing the method according to any one of claims 12 to 24, a module for performing the method according to any one of claims 25 to 28, or a module for performing the method according to claim 29.

60. A communication apparatus, comprising a processor, wherein the processor is configured to execute one or more computer programs or instructions, to enable the communication apparatus to perform the method according to any one of claims 1 to 11, enable the communication apparatus to perform the method according to any one of claims 12 to 24, enable the communication apparatus to perform the method according to any one of claims 25 to 28, or enable the communication apparatus to perform the method according to claim 29.

61. A communication system, comprising a first communication apparatus, a second communication apparatus, and a third communication apparatus, wherein the first communication apparatus is configured to perform the method according to any one of claims 1 to 11, the second communication apparatus is configured to perform the method according to any one of claims 12 to 24, and the third communication apparatus is configured to perform the method according to any one of claims 25 to 28.

62. A computer-readable storage medium, storing a computer program or instructions, wherein the computer program or the instructions are used to implement the method according to any one of claims 1 to 11, implement the method according to any one of claims 12 to 24, implement the method according to any one of claims 25 to 28, or implement the method according to claim 29.

63. A computer program product, wherein the computer program product comprises a computer program, and when the computer program is run on a computer, the computer is enabled to perform the method according to any one of claims 1 to 11, the computer is enabled to perform the method according to any one of claims 12 to 24, the computer is enabled to perform the method according to any one of claims 25 to 28, or the computer is enabled to perform the method according to claim 29.
